(19) Europäisches Patentamt / European Patent Office / Office européen des brevets

(11) **EP 3 746 988 B1**

(12) # EUROPÄISCHE PATENTSCHRIFT

(45) Veröffentlichungstag und Bekanntmachung des Hinweises auf die Patenterteilung:
**08.04.2026 Patentblatt 2026/15**

(21) Anmeldenummer: **19702902.8**

(22) Anmeldetag: **01.02.2019**

(51) Internationale Patentklassifikation (IPC):
*G06T 15/06* (2011.01)  *G06T 15/50* (2011.01)
*G06T 15/55* (2011.01)  *G01N 21/17* (2006.01)

(52) Gemeinsame Patentklassifikation (CPC):
**G06T 15/506; G06T 15/06; G06T 15/55**

(86) Internationale Anmeldenummer:
**PCT/EP2019/052501**

(87) Internationale Veröffentlichungsnummer:
**WO 2019/149888 (08.08.2019 Gazette 2019/32)**

(54) **VORRICHTUNG UND VERFAHREN ZUR ERZEUGUNG SENSORREALISTISCHER BILDER**

APPARATUS AND METHOD FOR PRODUCING SENSOR-REALISTIC IMAGES

DISPOSITIF ET PROCÉDÉ POUR LA GÉNÉRATION D'IMAGES DE RENDU RÉALISTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.02.2018 DE 102018201651**

(43) Veröffentlichungstag der Anmeldung:
**09.12.2020 Patentblatt 2020/50**

(73) Patentinhaber: **Fraunhofer-Gesellschaft zur Förderung**
**der angewandten Forschung e.V.**
**80686 München (DE)**

(72) Erfinder:
• **HÜTTEL, Markus**
**70569 Stuttgart (DE)**
• **LÄNGLE, Thomas**
**78131 Karlsruhe (DE)**
• **HEIZMANN, Michael**
**78131 Karlsruhe (DE)**

(74) Vertreter: **Schairer, Oliver Michael et al**
**Schoppe, Zimmermann, Stöckeler**
**Zinkler, Schenk & Partner mbB**
**Patentanwälte**
**Radlkoferstraße 2**
**81373 München (DE)**

(56) Entgegenhaltungen:
US-A1- 2006 023 202  US-A1- 2006 023 202
US-B1- 9 292 953  US-B1- 9 299 189
US-B2- 7 929 142  US-B2- 7 929 142

• LECH SWIRSKI ET AL: "Rendering synthetic ground truth images for eye tracker evaluation", EYE TRACKING RESEARCH AND APPLICATIONS, ACM, 2 PENN PLAZA, SUITE 701 NEW YORK NY 10121-0701 USA, 26 March 2014 (2014-03-26), pages 219 - 222, XP058045497, ISBN: 978-1-4503-2751-0, DOI: 10.1145/2578153.2578188
• GARGAN DAVID ET AL: "Approximating Reflectance Functions using Neural Networks", RENDERING TECHNIQUES '98 : PROCEEDINGS OF THE EUROGRAPHICS WORKSHOP IN VIENNA, AUSTRIA, JUNE 29-JULY 1, 1998, 1998, Vienna, pages 23 - 34, XP093053621, ISSN: 0946-2767, ISBN: 978-3-7091-6453-2, DOI: 10.1007/978-3-7091-6453-2_3
• HANSEN MARK F ET AL: "BRDF Estimation for Faces from a Sparse Dataset Using a Neural Network", 27 August 2013, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 212 - 220, ISBN: 978-3-540-74549-5, XP047038606

- ANTENSTEINER DORIS ET AL: "Full BRDF Reconstruction Using CNNs from Partial Photometric Stereo-Light Field Data", 2017 IEEE CONFERENCE ON COMPUTER VISION AND PATTERN RECOGNITION WORKSHOPS (CVPRW), IEEE, 21 July 2017 (2017-07-21), pages 1726 - 1734, XP033145961, DOI: 10.1109/CVPRW.2017.219
- LECH SWIRSKI ET AL: "Rendering synthetic ground truth images for eye tracker evaluation", EYE TRACKING RESEARCH AND APPLICATIONS, ACM, 2 PENN PLAZA, SUITE 701 NEW YORK NY 10121-0701 USA, 26 March 2014 (2014-03-26), pages 219 - 222, XP058045497, ISBN: 978-1-4503-2751-0, DOI: 10.1145/2578153.2578188
- GARGAN DAVID ET AL: "Approximating Reflectance Functions using Neural Networks", RENDERING TECHNIQUES '98 : PROCEEDINGS OF THE EUROGRAPHICS WORKSHOP IN VIENNA, AUSTRIA, JUNE 29-JULY 1, 1998, 1998, Vienna, pages 23 - 34, XP093053621, ISSN: 0946-2767, ISBN: 978-3-7091-6453-2, DOI: 10.1007/978-3-7091-6453-2_3
- HANSEN MARK F ET AL: "BRDF Estimation for Faces from a Sparse Dataset Using a Neural Network", 27 August 2013, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 212 - 220, ISBN: 978-3-540-74549-5, XP047038606

- ANTENSTEINER DORIS ET AL: "Full BRDF Reconstruction Using CNNs from Partial Photometric Stereo-Light Field Data", 2017 IEEE CONFERENCE ON COMPUTER VISION AND PATTERN RECOGNITION WORKSHOPS (CVPRW), IEEE, 21 July 2017 (2017-07-21), pages 1726 - 1734, XP033145961, [retrieved on 20170822], DOI: 10.1109/CVPRW.2017.219
- LECH SWIRSKI ET AL: "Rendering synthetic ground truth images for eye tracker evaluation", EYE TRACKING RESEARCH AND APPLICATIONS, ACM, 2 PENN PLAZA, SUITE 701 NEW YORK NY 10121-0701 USA, 26 March 2014 (2014-03-26), pages 219 - 222, XP058045497, ISBN: 978-1-4503-2751-0, DOI: 10.1145/2578153.2578188
- JEREMY BIRN: "Digital Lighting & Rendering passage", DIGITAL LIGHTING AND RENDERING, NEW RIDERS PUBLISHING, US, July 2000 (2000-07-01), pages 253 - 279, XP002313630
- BRIAN A BARSKY ET AL: "Algorithms for rendering depth of field effects in computer graphics", ICCOMP'08 PROCEEDINGS OF THE 12TH WSEAS INTERNATIONAL CONFERENCE ON COMPUTERS, 2008, pages 999 - 1010, XP055575021, ISBN: 978-960-6766-85-5

**Beschreibung**

Die Anmeldung betrifft Bildverarbeitung, und, im Speziellen, ein System und ein Verfahren zur Erzeugung sensorrealistischer Bilder.

Bei der Erstellung eines Bildverarbeitungssystems ergibt sich die Herausforderung, alle Komponenten des Bildverarbeitungssystems so zu gestalten und zu parametrieren, dass das bestmögliche Ergebnis für die Lösung der Aufgabenstellung erzielt wird. Aufgrund der Vielfalt der Parameter erfordert eine derartige Optimierung meist eine aufwändige Untersuchung sämtlicher Schritte der Bildgewinnung, Bildverarbeitung, Auswertung, Klassifikation etc. durch einen Experten, der dazu in der Regel zahlreiche Experimente durchführen muss. Dabei ist nicht sichergestellt, dass die optimale Konfiguration und Parametrierung überhaupt erreicht wird.

Dabei gibt es Aspekte, die eine solche Auswahl und Optimierung durch den Experten anhand realer Testeinrichtungen erschweren oder unmöglich machen. So ist der realistische Aufbau der Objekte in der Szene zur Erstellung eines Bildverarbeitungssystems kostspielig und zeitaufwendig. In vielen Fällen sind die Objekte bzw. die Szene nicht reproduzierbar oder können nicht realitätsnah nachgestellt werden (z.B. für Crashtests, Griff in die Kiste, natürliche Objekte, natürliche Umgebungen, unter Berücksichtigung der Tages- und Jahreszeit, der Wetterverhältnisse). In manchen Fällen (z.B. vor Fertigstellung eines Produktionssystems) sind die Objekte und die Szene noch gar nicht physisch existent.

Die vollständige Berücksichtigung und Evaluation aller In Frage kommenden Komponenten eines Bildverarbeitungssystems ist kostspielig und zeitaufwendig, da auf dem Markt eine große Anzahl von solchen Komponenten mit unterschiedlichen Eigenschaften verfügbar ist.

Betreffend die Anordnung der Objekte und der Hardwarekomponenten (Beleuchtungssystem und Kamerasystem) existieren viele geometrische Freiheitsgrade, so dass eine Optimierung komplex ist und experimentell nicht erschöpfend erfolgen kann.

Betreffend die Verfahren und Algorithmen zur Bildverarbeitung, Auswertung und Klassifikation liegt es angesichts der Vielfalt der möglichen Komponenten eines Bildverarbeitungssystems, der Freiheitsgrade und der Variabilität der Szene im Wesen der Bildverarbeitung, dass eine optimale Auswahl und optimale Kombination von Verfahren zur Bildverarbeitung und deren Parametrierung praktisch nicht möglich ist. Auch die Robustheit der gefundenen Lösung lässt sich kaum nachweisen.

Die oben beschriebenen Komplexitäten bei der Herstellung von Bildverarbeitungslösungen sorgen dafür, dass reale Anwendungen von Bildverarbeitungssystemen momentan noch auf relativ einfache Fragestellungen beschränkt sind. Jedoch werden bildverarbeitenden Systemen große technische Potenziale und weiter steigende Marktchancen eingeräumt. Diese Chancen lassen sich aber bisher oft nicht nutzen, da die praxisgerechte Entwicklung der Systeme, deren automatische Parametrierung, Optimierung und Test nur unzulänglich möglich sind.

Bei der heute üblichen Vorgehensweise zur Optimierung der aufgabenorientierten Bildgewinnung und -auswertung werden vom Experten zunächst Kamerasysteme (die beispielsweise Kameras, Objektiven und gegebenenfalls optische Filter umfassen), Beleuchtungssysteme und Bildverarbeitungsalgorithmen entsprechend der Aufgabenstellung gewählt und aufgabenspezifische, reale Szenen labortechnisch nachgebildet. Dann wird die Bilderfassung und -auswertung durchgeführt und die Auswerteergebnisse mit den erwünschten Ergebnissen verglichen. Solange das Ergebnis dieses Vergleichs unbefriedigend ausfällt, werden auf Basis von Erfahrungswissen Hardwarekomponenten und/oder geometrische Anordnungen dieser Komponenten und/oder Parameter der Bildauswertung vom Experten mit dem Ziel variiert, bessere Auswerteergebnisse zu erhalten.

Für eine Vielzahl von Anwendungen in der Bildverarbeitung würde sich jedoch der Zeit- und Kostenaufwand erheblich reduzieren lassen, wenn die Bilder, die ein reales Kamerasystem von der realen Welt aufnimmt, simuliert werden könnten.

Grundsätzlich können solche Bilder mit den Mitteln und Verfahren der Computergrafik hergestellt werden, jedoch entsprechen diese Bilder nur näherungsweise den Bildern eines realen Kamerasystems, da die Bilder in der Computergrafik überwiegend auf physikalisch korrekten, mathematisch beschriebenen oder auf mathematisch abstrahierten Gesetzmäßigkeiten basieren.

Für die Simulation von Bildern, die denen entsprechen, die ein reales Kamerasystem von der realen Welt aufnimmt, ist es jedoch sinnvoll, die Eigenschaften und Charakteristika von realen existierenden Lichtquellen (Lampen bzw. Leuchten; im Folgenden werden Lampen als eine Art von Leuchten verstanden), von realen existierenden Materialien und Objekten, von realen existierenden Objektiven und von realen existierenden Kamerasystemen zugrunde zu legen, um sogenannte sensorrealistische Bilder zu generieren.

Für die Synthese von Bildern der realen Welt, wie diese von einem Auge oder einem Kamerasystem wahrgenommen/abgebildet wird, bedarf es in einem ersten Schritt der Herstellung eines Modells der realen Welt, in dem alle an den Bildern und ihrer Entstehung beteiligten physischen Gegenstände und ihr räumlicher Bezug zueinander modelliert werden. Dies erfolgt üblicherweise durch eine mathematische Beschreibung der geometrischen Gestalt der Gegenstände, im Folgenden Objekte genannt, und deren räumliche Anordnung zueinander in einem geeigneten Weltkoordinatensystem. Die so modellierte reale Welt stellt die virtuelle Szene der an den Bildern und ihrer Entstehung beteiligen Objekte dar. In den relevanten Wissenschaftszweigen (IT, Physik, Mathematik, Optik, Maschinenbau, Architektur etc.) wird diese Szene CAD-Modell genannt. Mindestens ein oder mehrere Objekte dieser Szene stellen Lichtquellen (Lampen bzw. Leuchten) dar, da ansonsten die übrigen Objekte unsichtbar wären und mindestens ein oder mehrere Objekte stellen Augen bzw. Kamerasysteme dar, da sich sonst kein Bild ergäbe.

Für die Berechnung der synthetischen Bilder einer solchen Szene haben sich zwei grundsätzlich unterschiedliche Ansätze, das Radiosity- und das Raytracing-Verfahren, etabliert und durchgesetzt.

Das aus der Simulation der Wärmeleitung stammende, auf der Finite-Element-Methode *(FEM)* beruhende Radiosity-Verfahren berechnet die Lichtverteilung in einer Szene nach dem Energieerhaltungssatz, indem alles Licht, das auf eine Fläche fällt und von ihr nicht absorbiert wird, in die Szene zurück geworfen wird. Das Verfahren setzt voraus, dass alle Oberflächen ideal diffuse Reflektoren und alle Lichtquellen, im Modell durch selbstleuchtende Flächen repräsentiert, ideal diffuse Strahler sind, d.h. nicht absorbiertes Licht in alle Raumrichtungen gleichmäßig reflektiert bzw. abgestrahlt wird. Für die Berechnung der Lichtverteilung werden die Oberflächen der an einer Szene beteiligten Objekte zunächst in kleine Flächenelemente zerlegt. Dann wird für alle möglichen Flächenelementpaare ein rein geometrischer Formfaktor $F_{ij}$ berechnet, der in Abhängigkeit der Stellung der Flächenelemente zueinander und deren Entfernung voneinander angibt, welcher Anteil $B_{si}$ des versendeten Lichts (= spezifische Lichtstrahlung = radiosity [W/m$^2$]) eines Flächenelements *i* beim empfangenden Flächenelement *j* ankommt. Die gesamte empfangene Lichtstrahlung $B_{ej}$ eines Flächenelements ergibt sich dann als Summe der Strahlungsleistungen aller Licht sendenden Flächenelemente multipliziert mit dem jeweiligen Formfaktor, also

$$B_{ej} = \sum_{i=1}^{n} B_{si} F_{ij}$$

Wird nun im Weiteren ein Flächenelement *j* als Lichtsender betrachtet, kann für die Berechnung der abgegebenen Strahlungsleistung $B_{sj}$ dieses Flächenelements noch der Reflexionsgrad $p_j$ des Flächenelements berücksichtigt werden, indem die empfangene Strahlungsleistung mit diesem multipliziert wird

$$B_{sj} = p_j \sum_{i=1}^{n} B_{si} F_{ij}$$

Für den Fall, dass das Flächenelement *j* selbst eine Lichtquelle ist, kann dann zur Berechnung der abgegebenen Strahlungsleistung $B_{sj}$ noch die Eigenstrahlung $E_j$ addiert werden

$$B_{sj} = E_j + p_j \sum_{i=1}^{n} B_{si} F_{ij}$$

Die Berechnung der Radiosity aller Teilflächen führt dann zu folgendem Gleichungssystem

$$\begin{pmatrix} B_1 \\ B_2 \\ \vdots \\ B_n \end{pmatrix} = \begin{pmatrix} E_1 \\ E_2 \\ \vdots \\ E_n \end{pmatrix} + \begin{pmatrix} p_1 F_{11} & p_1 F_{12} & \cdots & p_1 F_{1n} \\ p_2 F_{21} & p_2 F_{22} & \cdots & p_2 F_{2n} \\ \vdots & \vdots & \ddots & \vdots \\ p_n F_{n1} & p_n F_{n2} & \cdots & p_n F_{nn} \end{pmatrix} \cdot \begin{pmatrix} B_1 \\ B_2 \\ \vdots \\ B_n \end{pmatrix} \iff B = E + T \cdot B$$

Dieses Gleichungssystem wird üblicherweise iterativ nach dem Gathering-Verfahren gelöst indem zunächst mit $B^0 = E$ (selbstleuchtende Flächen) und dann $B^k = E + T \cdot B^{k-1}$, $k > 0$ bis zu einem Abbruchkriterium berechnet werden.

Nach der Berechnung der Radiosity einer Szene wird das gewünschte Bild unter Berücksichtigung entsprechender Formfaktoren zwischen Szene und Auge bzw. Kamerasystem gerendert.

Die Vorteile der Radiosity-Verfahren bestehen darin, dass die Berechnung der Lichtverteilung zunächst unabhängig vom Standpunkt und Blickwinkel erfolgt und demzufolge Bilder aus unterschiedlichen Standorten und Blickwinkel sehr effizient berechnet werden können. Zudem werden Effekte diffuser Lichtreflektionen (Schattenübergänge, Farbreflektionen etc.) durch das Verfahren auf natürliche Weise unterstützt.

Nachteilig wirkt sich jedoch aus, dass auf Grund der Aufteilung der Szene in Flächenelemente keine analytisch beschreibbaren Objekte (z.B. Kugeln) verwendet werden können und dass die vorausgesetzten ideal diffusen Lichtreflektionen die Berechnung von Kaustiken und Spiegelungen prinzipiell ausschließt. Um diese Effekte berücksichtigen zu können, wurde das Radiosity-Verfahren entsprechend erweitert. Nachteilig wirken sich auch der extrem hohe Speicherbedarf bei komplexeren Szenen und die (empirische) Komplexität der Berechnung aus, die mit $O(N \cdot logN)$ deutlich höher als bei Raytracing-Verfahren mit $O(logN)$ liegt. Mit dem sogenannten Shooting-Verfahren, einer Erweiterung des Radiosity-Verfahrens, und den darauf aufbauenden Southwell-Iteration und Progressive-Refinement Verfahren werden bessere Konvergenzen zu "schönen" Bildern erreicht.

Im Unterschied zu den auf dem Energieerhaltungssatz basierenden Radiosity-Verfahren beruhen die Raytracing-Verfahren auf der Verfolgung von Lichtstrahlen in einer Szene, deren Ursprünge am Standort des Beobachters (Auge oder Kamerasystem) liegen und in Richtung seines Blickwinkels verlaufen. In der ursprünglichsten Form des Verfahrens wird dabei von einer Lochkamera ausgegangen, bei der das Bild auf der Mattscheibe / dem Film durch Lichtstrahlen ohne nennenswerte Querschnittsfläche (kleines Loch) aus der Szene entsteht. Da Lichtstrahlen aus unterschiedlichen Raumrichtungen alle durch das Loch der Kamera verlaufen, wird dieses für die Berechnung als Augpunkt bezeichnet und die Mattscheibe / der Film verfahrenstechnisch zwischen die Szene und den Augpunkt gelegt, was bezüglich der Bildgewinnung vollständig äquivalent zur Lochkamera ist.

Das eigentliche Verfahren beruht nun darauf, ausgehend vom Augpunkt einen zufälligen Strahl durch die Mattscheiben-/Filmebene in die Szene zu konstruieren und den am nächsten liegenden Schnittpunkt mit den Szenenobjekten zu ermitteln. Sofern es diesen gibt, werden von dort aus einer oder mehrere weitere Strahlen wieder in zufälliger Richtung konstruiert und wiederum für jeden Strahl der nächstliegende Schnittpunkt mit den Szenenobjekten ermittelt. Dieser Prozess wird solange wiederholt, bis die betrachteten Strahlen eine Lichtquelle treffen oder die Szene verlassen. Anschließend wird ausgehend von der Lichtquelle unter Berücksichtigung der BRDF (bidirectional radiation distribution function) bzw. der BTDF (bidirectional transmittance distribution function), welche das Streuverhalten von Licht an opaken Objektoberflächen bzw. transparenten Objekten beschreiben, und den Raumwinkeln der Strahlen an den Objekt-Schnittpunkten die Bestrahlungsstärke und Farbe auf der Mattscheibe bzw. auf dem Film berechnet, wobei sich diese an den Schnittpunkten, an denen sich mehrere Strahlen vereinen, als Summe der Bestrahlungsstärken der einzelnen Strahlen ergibt (Superpositionsprinzip).

Formal wurde dieses Verfahren 1986 erstmals von James T. Kajiya in seiner Veröffentlichung "The rendering equation" unter dem Begriff "Path tracing" veröffentlicht. Die ursprünglich veröffentlichte Rendering-Gleichung lautet:

$$I(x,x') = g(x,x') \cdot \left[ I_e(x,x') + \int_S b(x,x',x'')I(x',x'')dx'' \right]$$

Sie beschreibt, welche Lichtintensität einen Oberflächenpunkt x von einem anderen Oberflächenpunkt x' erreicht, wobei ein weiterer Oberflächenpunkt x" berücksichtigt wird, dessen Licht zunächst auf x' trifft und von dort aus nach x reflektiert wird. Die einzelnen Terme haben folgende Bedeutung:

Die Strahlintensität (engl. radiant *intensity*) I(x,x'), gemessen in [W/sr], gibt an, welche Lichtintensität den Punkt x von Punkt x' erreicht (W = Watt, sr = Raumwinkel (Steradiant)). Analoges gilt für den Term I(x',x").

Die geometrische Lage der Punkte x und x' zueinander wird durch den "geometrischen Term" g(x,x') beschrieben. Allgemein hat der Term den Wert $1/r^2$, wobei r der Abstand zwischen x und x' ist (Abstandsgesetz physikalischer Größen). Liegt jedoch eine weitere Oberfläche zwischen x und x', so ist der Term = 0, d.h. bei x kommt kein Licht auf direktem Weg von x' an. Das gilt auch für völlig transparente Oberflächen, die das Licht von x' vollständig aufnehmen und auf der gegenüber liegenden Seite erneut ausstrahlen.

Liegt der Punkt x' auf der Oberfläche einer Lampe (die eine Lichtquelle ist; eine Lampe ist auch eine Leuchte) bzw. auf der Oberfläche einer Leuchte, dann beschreibt der "Emissionsterm" $I_e(x,x')$, ebenfalls in [W/sr] gemessen, wie viel Licht von x' nach x abgestrahlt wird.

Der "Streuungsterm" b(x,x',x") gibt an, welcher Anteil des Lichts, das x' von x" aus erreicht, in Richtung x reflektiert wird. Dies ist i.A. eine bidirektionale Streuverteilungsfunktion (BSDF = bidirectional scattering distribution function)

S ist die Gesamtheit aller Flächen in der Szene.

Wird in der obigen Gleichung die Lichtintensität I durch die Strahldichte (radiance) L, gemessen in [W/m$^2$·sr], ersetzt, ergibt sich die in der Literatur häufig verwendete, äquivalente Form:

$$L(x,\vec{\omega}) = L_e(x,\vec{\omega}) + \int_\Omega f_r(x,\vec{\omega},\vec{\omega}')L(x,\vec{\omega}')(\vec{\omega}',\vec{n})d\vec{\omega}'$$

Anstelle des zweiten und dritten Punkts x' und x" werden hier ein Punkt x und ein Richtungsvektor $\vec{\omega}$ für den

betrachteten Lichtstrahl angegeben. Die einzelnen Terme haben die Bedeutung:

Die Strahldichte $L(x,\vec{\omega})$ gibt an, wie viel Licht von $x$ in Richtung $\vec{\omega}$ abgestrahlt wird.

Der Emissionsterm $L_e(x,\vec{\omega})$ gibt an, wie viel Licht vom Punkt x in Richtung $\vec{\omega}$ ausgestrahlt wird, falls x ein Punkt einer Lichtquelle ist.

0

Der Streuungsterm $f_r(x,\vec{\omega},\vec{\omega}')$ ist eine BRDF an der Stelle x mit Einfallswinkel $\vec{\omega}$ und Ausfallswinkel $\vec{\omega}'$.

Der Term $L(x,\vec{\omega}')$ beschreibt, wie viel Licht den Punkt $x$ aus Richtung $\vec{\omega}'$ erreicht.

$\vec{n}$ ist die Normale der Oberfläche im Punkt $x$.

$\Omega$ ist die Gesamtheit aller Winkel der Hemisphäre über dem Punkt $x$.

Von den mannigfaltigen, auf dem Path-tracing Verfahren aufbauenden Verfahren mit Verbesserungen von Laufzeit, Lichtverteilung, Schattenberechnung, Realitätstreue (Photorealismus) seien hier das "Photon mapping", das "Bi-directional path-tracing", der "Importance-Driven Radiosity Algorithm" und der "Metropolis Light Transport" genannt.

Neben dem grundsätzlichen Unterschied im Ansatz der Radiosity- (Energieerhaltungssatz) und der Raytracing-Verfahren (Verfolgen von Lichtstrahlen) berücksichtigen die Raytracing-Verfahren folgende Parameter:

Die orts- und raumrichtungsabhängige Lichtintensität von mehr oder weniger ausgedehnten Lampen bzw. Leuchten (Abstrahlcharakteristika).

Das raumrichtungsabhängige Reflexionsverhalten von Lichtstrahlen, die auf Materie treffen, mittels BRDF (bidirectional reflectance distribution function).

Das raumrichtungsabhängige Transmissionsverhalten von Lichtstrahlen, die auf Materie treffen, mittels BTDF (bidirectional transmitance distribution function).

Das raumrichtungsabhängige innere Reflexionsverhalten von Lichtstrahlen, die auf Materie treffen, mittels SSS (surface scattering) bzw. mittels SSLT (subsurface light transport).

Die Abbildungseigenschaften von Objektiven.

Der Apertur-abhängige Tiefenschärfeneffekt.

Die Eigenschaften des bildgebenden Elements (Auge: Netzhaut, Kamerasystem: Film oder (Halbleiter-)Sensor).

Hierdurch werden realistischere Bilder erzeugt.

Die bei Raytracing-Verfahren zur Simulation von Bildern einer durch ein virtuelles Modell gegebenen realen Szene gelegentlich berücksichtigten Abbildungseigenschaften von Objektiven beschränken sich auf Abbildungsmodelle und mathematische Berechnungsvorschriften von dünnen Linsen, geometrischen oder Gauß'schen Optiken, um diverse geometrisch-optische (Verzeichnung, Vignettierung, sphärische und chromatische Aberration), wellenoptische (Auflösungsvermögen) und andere Einflüsse (Belichtungszeit) bei der Bildentstehung zu berücksichtigen. Dem Apertur-abhängigen Tiefenschärfeeffekt wird Rechnung getragen, indem pro Bildpunkt nicht nur ein zentraler Strahl in die virtuelle Szene, sondern mehrere Strahlen berücksichtigt werden, die sich konstruktiv aus der Überlegung ergeben, dass sich die Lichtintensität eines Bildpunkts aus der Strahldichte aller Strahlen von diversen Objektpunkten durch die Apertur des Bildpunkts ergibt. Da die objektseitige Abbildung eines Bildpunkts i.A. nicht auf einem Objekt der virtuellen Szene liegt, werden entlang dieser Strahlen die nächstliegenden Schnittpunkte mit den Szenenobjekten ermittelt und deren Lichtintensität akkumuliert.

Die Eigenschaften der bildgebenden Elemente werden bei Raytracing-Verfahren ebenfalls berücksichtigt, indem im Fall des menschlichen Auges (Netzhaut) mit photometrischen und im Fall von Kamerasystemen (Film, (Halbleiter-)Sensor) mit radiometrischen Größen gerechnet wird. Der Einfluss relevanter Größen bei Filmen und Halbleitersensoren wird nur selten in Betracht gezogen und beschränkt sich im Wesentlichen auf heuristisch angenommenes Rauschen, da i.d.R. "schöne" Bilder entstehen sollen.

Entscheidende Einflüsse auf die Realitätstreue des Ergebnisses der Raytracing-Verfahren haben die Abstrahlcharakteristika von mehr oder weniger ausgedehnten Lampen bzw. Leuchten, das Reflexions- bzw. Transmissionsverhalten der Materialien, die Abbildungseigenschaften von Objektiven und die Eigenschaften des bildgebenden Sensors bei Kamerasystemen.

Aus LECH SWIRSKI ET AL: "Rendering synthetic ground truth images for eye tracker evaluation", EYE TRACKING RESEARCH AND APPLICATIONS, 26. März 2014, Seiten 219-222, DOI: 10.1145/2578153.2578188 ist ein Ansatz zur Erzeugung realistischer synthetischer Bilder bekannt, in welchem nicht-ideale Eigenschaften des simulierten Kamerasystems berücksichtigt werden. GARGAN DAVID ET AL: "Approximating Reflectance Functions using Neural Networks",

RENDERING TECHNIQUES '98 : PROCEEDINGS OF THE EUROGRAPHICS WORKSHOP IN VIENNA, AUSTRIA, DOI: 10.1007/978-3-7091-6453-2_3 offenbart eine auf einem neuronalen Netzwerkmodell basierende Darstellung für die Speicherung und Rekonstruktion beliebiger Reflexionsfunktionen.

Die Patentpublikation US 7929142 B2 offenbart eine Vorrichtung zur photodiodenbasierten Messung bidirektionaler Reflexionsverteilungsfunktionen (BRDF).

Wünschenswert wäre es also, Konzepte für realitätstreuere Erzeugungen eines Kamerabildes und somit zur Erzeugung sensorrealistischer Bilder zu erhalten.

Weiter wünschenswert wäre es, verbesserte Konzepte zur Bestimmung von Reflektions- und Transmissionsverhalten und verbesserte Konzepte zur Bestimmung von Abstrahlcharakteristika von Lichtquellen zu erhalten.

Eine Vorrichtung nach Anspruch 1, ein Verfahren nach Anspruch 14 und ein Computerprogramm nach Anspruch 15 werden bereitgestellt.

Nachfolgend werden bevorzugte Ausführungsformen der Erfindung unter Bezugnahme auf die Zeichnungen beschrieben.

In den Zeichnungen ist dargestellt:

Fig. 1 zeigt eine Vorrichtung zur Erzeugung eines Ergebnisbildes gemäß einer Ausführungsform.

Fig. 2 zeigt eine schematische Darstellung der Funktionsweise des Renderingframeworks Mitsuba®.

Fig. 3 zeigt eine Vorrichtung zur Erzeugung eines Ergebnisbildes gemäß einer weiteren Ausführungsform.

Fig. 4 zeigt eine beispielhafte Vorgehensweise zur Erzeugung eines Ergebnisbildes aus einem fotorealistischem Bild gemäß einer Ausführungsform.

Fig. 5 zeigt ein System zur Ermittlung eines physikalischen Verhaltens eines Messobjekts oder eines Beleuchtungssystems oder einer Leuchte gemäß einer Ausführungsform.

Fig. 6 zeigt eine Messanordnung, die zur Ermittlung der Bidirektionalen Reflektanzverteilungsfunktion geeignet ist.

Fig. 7 zeigt eine Haltevorrichtung und eine Messprobe,

Fig. 8 zeigt eine Messanordnung, die zur Ermittlung der Bidirektionalen Transmissionsverteilungsfunktion geeignet ist.

Fig. 9 zeigt ein neuronales Netz 995 gemäß einer Ausführungsform.

Fig. 10 zeigt eine Vorrichtung zur Berechnung einer Lichtstrahldichte für jeden Bildpunkt einer Gruppe von ein oder mehreren Bildpunkten eines Kamerasystems gemäß einer Ausführungsform.

Fig. 11 zeigt eine Anordnung gemäß einer Ausführungsform, die ein Beleuchtungssystem, ein Objekt und ein Kamerasystem aufweist.

Fig. 12 zeigt ein System gemäß einer Gruppe von Ausführungsformen.

Fig. 13 zeigt ein System gemäß einer weiteren Ausführungsform.

Nachfolgend werden Konzepte für ein sensorrealistisches Simulationsframework und für die virtuelle Bildverarbeitung bereitgestellt.

Um für ein Prüfszenenkonzept das resultierende Bild zu erhalten, kann der Entwurf entweder praktisch als Experiment umgesetzt werden oder es können photo- bzw. sensorrealistische Simulationswerkzeuge der Computergrafik verwendet werden.

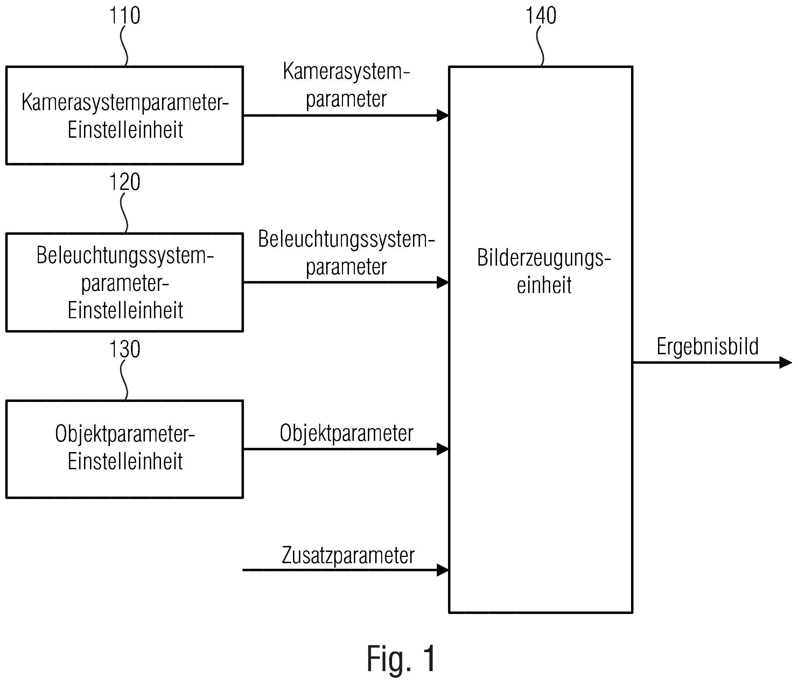

Beispielsweise könnte das physikalisch basierte Renderingframework Mitsuba® eingesetzt werden. Der grundlegende Aufbau dieser Softwarebibliothek ist in Abb. 1 dargestellt. Die meisten derzeit verfügbaren Renderingframeworks basieren auf einem solchen Aufbau.

Um ein sensorrealistisches Bild generieren zu können, sollte die Szene, also alle relevanten Objekte, alle aktiven Lichtquellen und das verwendete Kamerasystem mit den dafür relevanten Eigenschaften modelliert werden.

Die Objekte der Szene können geometrisch bspw. durch ihre CAD-Modelle beschrieben werden. Ihre Reflektanzeigenschaften können mit Hilfe von sogenannten bidirektionalen Reflektanzverteilungsfunktionen (BRDF = engl. für 'bidirectional reflectance distribution function') modelliert werden. Bei (teil-)transparenten Objekten kann zudem der Brechungsindex bzw. die Brechungsindexverteilung und das Volumenstreuverhalten der Objekte angegeben werden. Für diese Objekteigenschaften existieren parameterisierbare Modelle, die in Mitsuba® oder anderen Renderern verwendet werden können.

Gleichermaßen sollten auch die in der Szene vorhandenen Lichtquellen charakterisiert werden. Dazu gehören insbesondere Angaben über das emittierte Spektrum, die Richtungsverteilung der ausgehenden Strahlen bzw. Strahldichten und ggf. die geometrischen Abmessungen der Lichtquelle.

Des Weiteren sollte eine Modellierung des verwendeten Kamerasystems bereitgestellt werden. Ein Kamerasystem kann so beispielsweise anhand der typischen Parameter wie der Brennweite, Bildweite, Apertur, Anzahl, Abstand und Dimensionen der Pixel in Mitsuba® modelliert werden.

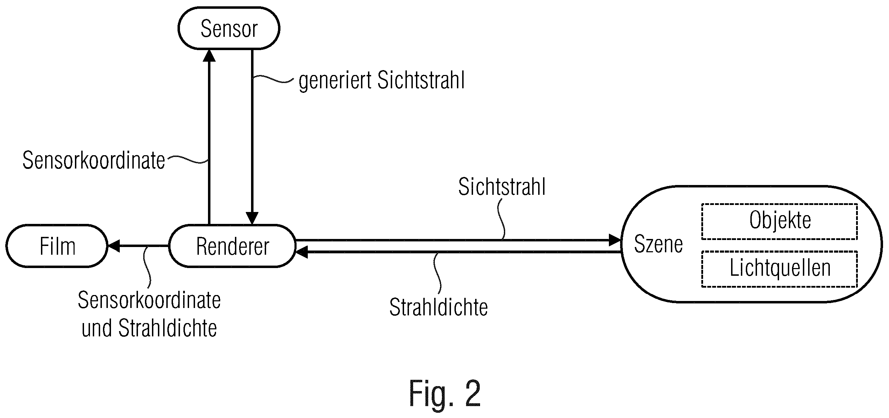

Fig. 2 zeigt hierzu beispielhaft eine schematische Darstellung der Funktionsweise des Renderingframeworks Mitsuba®.

Um nun ein möglichst realistisches Kamerasystembild zu erhalten, wählt das Renderingframework z.B. nach einem bestimmten Zufallsmuster nacheinander einzelne kontinuierliche Pixelkoordinaten des Kamerasystems aus.

Über das Kamerasystemmodell werden dann die korrespondierenden Sichtstrahlen generiert und deren Verlauf durch die modellierte Szene verfolgt. Dabei kann der Sichtstrahl an Objekten reflektiert, absorbiert oder in eine Lichtquelle weitergeleitet werden. Strahlt die getroffene Lichtquelle Licht in die entsprechende Richtung ab, so wird die emittierte Strahldichte entlang des optischen Pfads des verfolgten Sichtstrahls zurück zum ursprünglichen Sensorpixel propagiert. Dabei werden die Eigenschaften der am Pfadverlauf beteiligten Objektoberflächen bzw. -volumen entsprechend berücksichtigt.

Das resultierende Spektrum wird dann zusammen mit der ausgewählten Sensorkoordinate von einer sogenannten Filmkomponente aggregiert, um so sukzessive das komplette Sensorbild bzw. -signal zu erzeugen. Der Prozess entsprechend Fig. 2 wird so lange wiederholt, bis eine ausreichende Bildqualität erreicht wurde bzw. bis sich nichts mehr am generierten Bild ändert.

Ausführungsformen der Erfindung basieren nun darauf, mit dieser Methodik auf vergleichbare Art und Weise insbesondere bisher nicht umgesetzte bzw. realisierte vom Ideal abweichende Effekte einer Bildaufnahme zu simulieren und in das Framework zu integrieren.

Fig. 1 zeigt eine Vorrichtung zur Erzeugung eines Ergebnisbildes gemäß einer Ausführungsform, wobei die Vorrichtung eingerichtet ist, das Ergebnisbild so zu erzeugen, dass eine Aufnahme einer Szene durch ein Kamerasystem simuliert wird.

Die Vorrichtung ist eingerichtet, ein Vorhandensein eines Beleuchtungssystems, das ein oder mehrere Lichtquellen umfasst, die die Szene beleuchten, zu simulieren. Des Weiteren ist die Vorrichtung eingerichtet, zu simulieren, dass sich in der Szene ein oder mehrere Objekte befinden.

Die Vorrichtung umfasst eine Kamerasystemparameter-Einstelleinheit 110, die zur Einstellung ein oder mehrerer Kamerasystemparameter ausgebildet ist, wobei jeder der ein oder mehreren Kamerasystemparameter eine Eigenschaft des Kamerasystems definiert.

Ferner umfasst die Vorrichtung eine Beleuchtungssystemparameter-Einstelleinheit 120, zur Einstellung ein oder mehrerer Beleuchtungssystemparameter ausgebildet ist, wobei jeder der ein oder mehreren Beleuchtungssystemparameter eine Eigenschaft des Beleuchtungssystems definiert.

Zudem umfasst die Vorrichtung eine Objektparameter-Einstelleinheit 130, die für jedes Objekt der ein oder mehreren Objekte zur Einstellung ein oder mehrerer Objektparameter dieses Objekts ausgebildet ist, wobei jeder der ein oder mehreren Objektparameter dieses Objekts eine Eigenschaft dieses Objekts definiert.

Des Weiteren umfasst die Vorrichtung eine Bilderzeugungseinheit 140, die ausgebildet ist, das Ergebnisbild abhängig von den ein oder mehreren Kamerasystemparametern und abhängig von den ein oder mehreren Beleuchtungssystemparametern und abhängig von den ein oder mehreren Objektparametern der ein oder mehreren Objekte zu erzeugen.

Die Vorrichtung ist, zusätzlich zu den ein oder mehreren Kamerasystemparametern und zusätzlich zu den ein oder mehreren Beleuchtungssystemparametern und zusätzlich zu den ein oder mehreren Objektparameter der ein oder mehreren Objekte, zur Einstellung von ein oder mehreren Zusatzparametern ausgebildet.

Ferner ist die Bilderzeugungseinheit 140 ausgebildet, das Ergebnisbild zusätzlich abhängig von den ein oder mehreren Zusatzparametern zu erzeugen. Wenigstens einer der ein oder mehreren Zusatzparameter hängt von einem Störungseffekt oder von einem Effekt bedingt durch eine nichtideale Eigenschaft des Kamerasystems oder des Beleuchtungssystems ab.

Beispielsweise kann in Ausführungsformen eine nichtideale Eigenschaft des Kamerasystems eine Abweichung eines Istzustands dieser Eigenschaft des Kamerasystems von einem vordefinierten Sollzustand dieser Eigenschaft des Kamerasystems sein.

Beispielsweise kann in Ausführungsformen eine nichtideale Eigenschaft des Beleuchtungssystems eine Abweichung eines Istzustands dieser Eigenschaft des Beleuchtungssystems von einem vordefinierten Sollzustand dieser Eigenschaft des Beleuchtungssystems sein.

In Ausführungsformen kann z.B. der wenigstens eine der ein oder mehreren Zusatzparameter von dem Effekt bedingt durch die nichtideale Eigenschaft des Kamerasystems abhängen, wobei die nichtideale Eigenschaft des Kamerasystems z.B. eine Verschmutzung einer optischen Komponente des Kamerasystems sein kann, oder z.B. ein Defekt in einer optischen Komponente des Kamerasystems sein kann, oder z.B. ein fehlerhaftes Pixel sein kann, oder z.B.

ein Abbildungsfehler in der Optik des Kamerasystems sein kann.

In weiteren Ausführungsformen kann z.B. der wenigstens eine der ein oder mehreren Zusatzparameter von dem Effekt bedingt durch die nichtideale Eigenschaft des Beleuchtungssystems abhängen, wobei die nichtideale Eigenschaft des Beleuchtungssystems z.B. eine Verschmutzung des Beleuchtungssystems sein kann, oder z.B. eine reduzierte Leuchtkraft des Beleuchtungssystems gegenüber einem vordefinierten, optimalen Leuchtkraft des Beleuchtungssystems sein kann.

In Ausführungsformen kann z.B. der wenigstens eine der ein oder mehreren Zusatzparameter von dem Effekt bedingt durch die nichtideale Eigenschaft des Kamerasystems abhängt, die von einer Alterung des Kamerasystems verursacht ist. Oder der wenigstens eine der ein oder mehreren Zusatzparameter von dem Effekt bedingt durch die nichtideale Eigenschaft des Beleuchtungssystems abhängt, die von einer Alterung des Beleuchtungssystems verursacht ist.

In solchen Ausführungsformen hängt der Zusatzparameter also im Ergebnis von einer Alterung des Kamerasystems oder von einer Alterung des Beleuchtungssystems ab.

In Ausführungsformen können bisher nicht umgesetzte bzw. realisierte vom Ideal abweichende Effekte berücksichtigt werden, die in einer Bildaufnahme simuliert werden und in das Framework integriert werden, die unter anderem die folgenden Phänomenen beruhen:

Verschmutzung der Objekt-Oberfläche.

Verschmutzungen der optischen Komponenten des Kamera- oder des Beleuchtungssystems.

Defekte in den optischen Komponenten des Kamera- oder des Beleuchtungssystems (z.B. Spiegeln, Linsen).

Fehlerhafte Pixel des Sensors des Kamerasystems.

Nichtideale Effekte bei der Strahlungsübertragung durch Luft.

Abbildungsfehler der Optiken des Kamera- oder des Beleuchtungssystems.

Alterung des Beleuchtungssystems.

Auswirkung der äußeren Bedingungen (z.B. Hitze).

Auswirkung von Fremdlicht.

Auswirkung der Materialeigenschaft eines Objekts.

Gemäß einer Ausführungsform kann die Objektparameter-Einstelleinheit 130, zusätzlich zu den ein oder mehreren Objektparametern der ein oder mehreren Objekte, zur Einstellung eines der ein oder mehreren Zusatzparameter ausgebildet sein, wobei dieser eine der ein oder mehreren Zusatzparameter von einer Verschmutzung einer Oberfläche eines Objekts der ein oder mehreren Objekte abhängen kann.

In einer Ausführungsform kann die Kamerasystemparameter-Einstelleinheit 110, zusätzlich zu den ein oder mehreren Kamerasystemparametern, zur Einstellung eines der ein oder mehreren Zusatzparameter ausgebildet sein, wobei dieser eine der ein oder mehreren Zusatzparameter von einer Verschmutzung einer optischen Komponente des Kamera- oder des Beleuchtungssystems abhängen kann.

Gemäß einer Ausführungsform kann die Kamerasystemparameter-Einstelleinheit 110, zusätzlich zu den ein oder mehreren Kamerasystemparametern, zur Einstellung eines der ein oder mehreren Zusatzparameter ausgebildet sein, wobei dieser eine der ein oder mehreren Zusatzparameter von einem Defekt in einer optischen Komponente des Kamerasystems abhängen kann.

In einer Ausführungsform kann die Kamerasystemparameter-Einstelleinheit 110, zusätzlich zu den ein oder mehreren Kamerasystemparametern, zur Einstellung eines der ein oder mehreren Zusatzparameter ausgebildet sein, wobei dieser eine der ein oder mehreren Zusatzparameter von einem fehlerhaften Pixel abhängen kann.

Gemäß einer Ausführungsform kann die Kamerasystemparameter-Einstelleinheit 110, zusätzlich zu den ein oder mehreren Kamerasystemparametern, zur Einstellung eines der ein oder mehreren Zusatzparameter ausgebildet sein, wobei dieser eine der ein oder mehreren Zusatzparameter von einem (insbesondere nichtidealen) Effekt der Strahlungsübertragung durch Luft abhängen kann.

In einer Ausführungsform kann die Kamerasystemparameter-Einstelleinheit 110, zusätzlich zu den ein oder mehreren Kamerasystemparametern, zur Einstellung eines der ein oder mehreren Zusatzparameter ausgebildet sein, wobei dieser eine der ein oder mehreren Zusatzparameter von einem Abbildungsfehler einer Optik des Kamerasystems abhängen kann.

Gemäß einer Ausführungsform kann die Beleuchtungssystemparameter-Einstelleinheit 120, zusätzlich zu den ein oder mehreren Beleuchtungssystemparametern, zur Einstellung eines der ein oder mehreren Zusatzparameter ausgebildet sein, wobei dieser eine der ein oder mehreren Zusatzparameter von einer Alterung des Beleuchtungssystems abhängen kann.

In einer Ausführungsform kann die Kamerasystemparameter-Einstelleinheit 110, zusätzlich zu den ein oder mehreren Kamerasystemparametern, zur Einstellung eines der ein oder mehreren Zusatzparameter ausgebildet sein, wobei dieser eine der ein oder mehreren Zusatzparameter von einer Umgebungstemperatur abhängen kann.

Gemäß einer Ausführungsform kann die Kamerasystemparameter-Einstelleinheit 110, zusätzlich zu den ein oder mehreren Kamerasystemparametern, zur Einstellung eines der ein oder mehreren Zusatzparameter ausgebildet sein, wobei dieser eine der ein oder mehreren Zusatzparameter von Fremdlicht abhängen kann, das nicht von den ein oder mehreren Lichtquellen emittiert wird.

Gemäß einer Ausführungsform kann die Objektparameter-Einstelleinheit 130, zusätzlich zu den ein oder mehreren Objektparametern der ein oder mehreren Objekte, zur Einstellung eines der ein oder mehreren Zusatzparameter ausgebildet sein, wobei dieser eine der ein oder mehreren Zusatzparameter von einer Materialeigenschaft eines Objekts der ein oder mehreren Objekte abhängen kann.

Durch die Erweiterung der Simulation der kompletten Bildaufnahme eines Produktes unter idealen und hiervon abweichenden Bedingungen ist es möglich, eine Auslegung des Bildverarbeitungssystems unter realistischen (nicht idealen) Bedingungen durchzuführen. Bei der Umsetzung der Algorithmen ist für den betrachteten Anwendungsfall auf deren Echtzeitfähigkeit zu achten, beispielsweise durch unterschiedlich genaue Simulationen in verschiedenen Szenenbereichen (Pyramidenansatz). Die hat zudem Auswirkung auf die betrachteten Modelle bzw. Algorithmen, da diese bezüglich dieser externen Vorgaben parametrierbar sein müssen.

Durch einfache Variationen der Kamerasystemparameter können mit diesem Verfahren schnell und günstig unterschiedliche Ansätze evaluiert werden. Die entstehenden Bilder können insbesondere auch zum Testen oder Trainieren (z.B. Deep Learning) nachgeschalteter Bildverarbeitungsmethoden verwendet werden.

Gemäß einer Ausführungsform kann die Bilderzeugungseinheit 140 ausgebildet sein, das Bild zusätzlich abhängig von einer Lichtstrahldichte jedes Lichtstrahls von ein oder mehreren Lichtstrahlen zu erzeugen, wobei jeder der ein oder mehreren Lichtstrahlen von einer der ein oder mehreren Lichtquellen ausgeht, oder von einem Objekt der ein oder mehreren Objekte ausgeht, indem ein weiterer Lichtstrahl von diesem Objekt reflektiert wird oder indem der weitere Lichtstrahl dieses Objekt transmittiert.

In einer Ausführungsform kann die Bilderzeugungseinheit 140 ausgebildet sein, eine Lichtstrahldichte von einem der ein oder mehreren Lichtstrahlen unter Verwendung einer Bidirektionalen Reflektanzverteilungsfunktion oder unter Verwendung einer Bidirektionalen Transmissionsverteilungsfunktion zu bestimmen.

Nachfolgend werden Konzepte für eine Korrektur eines fotorealistischen Bildes zum Erhalt eines sensorrealistischen Ergebnisbildes bereitgestellt.

Ausführungsformen basieren dabei darauf, ein Bild, das mit einem üblichen Bildgenerator (Renderer) erzeugt worden ist (d.h. ein fotorealistisches Bild), so zu verändern, dass es einem real mittels eines Bildverarbeitungs-Systems erzeugbaren Bild entspricht.

Übliche Renderer aus der Computergrafik (z.B. Mitsuba®, Blender®, POV-Ray®) erzeugen synthetische Bilder, indem von der physikalischen Realität bei der Bildgewinnung abstrahiert wird. Dabei werden Einflüsse bei der Bildgewinnung, die gegenüber einer idealen optischen Abbildung der Szene üblicherweise zu einer Verschlechterung der Bilder führen, weggelassen.

Die Berücksichtigung solcher Degenerationseinflüsse ist bei den üblichen Anwendungen von Renderern nicht erforderlich, da es meist um die Visualisierung von Szenen zum Zwecke der besseren Anschaulichkeit für menschliche Betrachter geht. Das Weglassen solcher Einflüsse hat mehrere normalerweise als positiv wahrgenommene Auswirkungen. Erstens sehen die Bilder schön aus. Zweitens können bestehende Renderer die Degenerationseinflüsse nicht beschreiben bzw. modellieren; sie verfügen nicht über die Verfahren/Algorithmen zur Berücksichtigung von solchen Degenerationseinflüssen. Drittens wird Rechenzeit gespart, die zur Berücksichtigung von Degenerationseinflüssen notwendig wäre.

In der Folge sind die mit klassischen Renderern erzeugten Bilder zwar für viele Anwendungen von synthetischen Bildern gut geeignet (z.B. zur Beurteilung des Aussehens von Produkten oder zur Beurteilung der Sichtbarkeit von Objektmerkmalen von der Position des Kamerasystems aus). Insbesondere aber für die realitätsgetreue Auslegung von automatischen Sichtprüfsystemen sind solche Bilder nicht geeignet, da für diese Aufgabenstellung die Berücksichtigung aller relevanten optischen Eigenschaften der an der Bildgewinnung beteiligten Komponenten sinnvoll ist. Beispiele für Aufgabenstellungen, die bisher nicht befriedigend gelöst werden können, sind die Beurteilung der Messbarkeit von geometrischen Szeneneigenschaften oder die Beurteilung der Detektierbarkeit von Fehlern auf Oberflächen.

Zwar werden bei neueren Renderern in zunehmendem Maße auch optische Fehlereinflüsse berücksichtigt, diese beschränken sich aber meist auf relativ einfach zu modellierende Eigenschaften der Abbildungsoptik, des Kamerasystems, der Szene und des Mediums zwischen Szene und Kamerasystem.

Bislang bereits berücksichtigte Einflüsse sind beispielsweise eine Abbildung mittels eines Linsensystems mit beschränkter Schärfentiefe anstelle des idealisierten Lochkameramodells; Nebel oder Rauch im Medium zwischen Szene und Kamerasystem; Transparenz und Transluzenz von Szenenobjekten und Mehrfachreflexionen des von dem Beleuchtungssystem stammenden Lichts an Szenenobjekten.

Ausführungsformen der Erfindung sehen nun vor, zunächst auf herkömmliche Weise ein oder mehrere erste Bilder zu erzeugen und diese ein oder mehreren ersten Bilder geeignet zu verwenden, um Degenerationseinflüsse zu berücksichtigen.

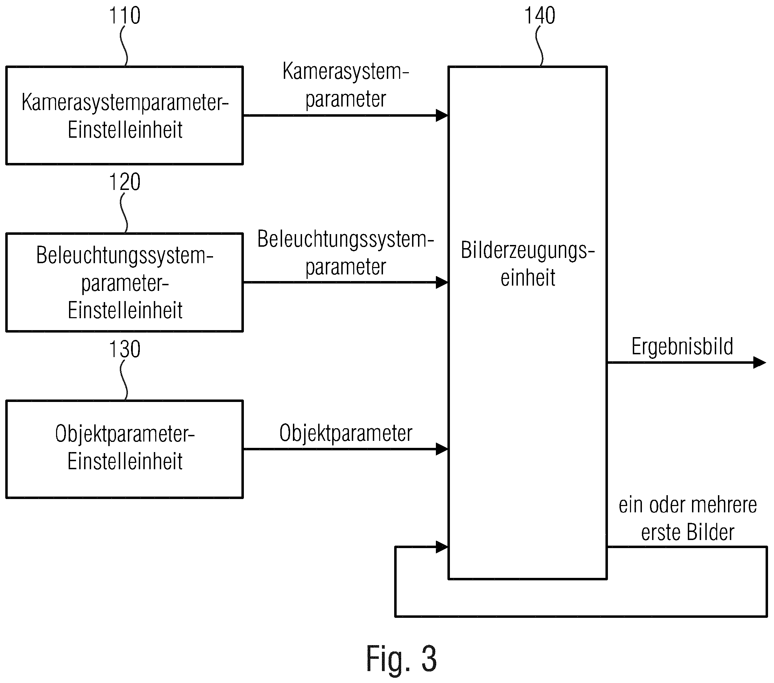

Fig. 3 zeigt eine Vorrichtung zur Erzeugung eines Ergebnisbildes gemäß einer Ausführungsform, wobei die Vorrichtung eingerichtet ist, das Ergebnisbild so zu erzeugen, dass eine Aufnahme einer Szene durch ein Kamerasystem simuliert wird. Dabei ist die Vorrichtung eingerichtet, ein Vorhandensein eines Beleuchtungssystems, das ein oder mehrere Lichtquellen umfasst, die die Szene beleuchten, zu simulieren, und wobei die Vorrichtung eingerichtet ist, zu simulieren, dass sich in der Szene ein oder mehrere Objekte befinden.

Die Vorrichtung umfasst eine Kamerasystemparameter-Einstelleinheit 110, die zur Einstellung ein oder mehrerer Kamerasystemparameter ausgebildet ist, wobei jeder der ein oder mehreren Kamerasystemparameter eine Eigenschaft des Kamerasystems definiert.

Ferner umfasst die Vorrichtung eine Beleuchtungssystemparameter-Einstelleinheit 120, die zur Einstellung ein oder mehrerer Beleuchtungssystemparameter ausgebildet ist, wobei jeder der ein oder mehreren Beleuchtungssystemparameter eine Eigenschaft des Beleuchtungssystems definiert.

Des Weiteren umfasst die Vorrichtung eine Objektparameter-Einstelleinheit 130, die für jedes Objekt der ein oder mehreren Objekte zur Einstellung ein oder mehrerer Objektparameter dieses Objekts ausgebildet ist, wobei jeder der ein oder mehreren Objektparameter dieses Objekts eine Eigenschaft dieses Objekts definiert.

Ferner umfasst die Vorrichtung eine Bilderzeugungseinheit 140, die ausgebildet ist, ein oder mehrere erste Bilder abhängig von den ein oder mehreren Kamerasystemparametern und abhängig von den ein oder mehreren Beleuchtungssystemparametern und abhängig von den ein oder mehreren Objektparametern der ein oder mehreren Objekte zu erzeugen. Die Bilderzeugungseinheit 140 ist ausgebildet, das Ergebnisbild unter Verwendung der ein oder mehreren ersten Bilder zu erzeugen.

Die Veränderung der von üblichen Renderern erzeugten Bilder (in folgenden als fotorealistische Bilder bezeichnet) kann nun mehrere zusätzliche Einflussquellen berücksichtigen.

Beispielsweise kann in Ausführungsformen eine detaillierte Modellierung der Abstrahlcharakteristik der Lichtquelle erfolgen.

Des Weiteren können manche Ausführungsformen eine Simulierung einer tiefengestaffelten Szene mit gewünschten Szenenobjekten und Störobjekten (z.B. fliegende Insekten im Strahlengang) erlauben.

Ferner können manche Ausführungsformen eine Simulierung einer Dynamik des Beleuchtungssystems (z.B. Blitzbeleuchtung, sinusförmige oder andere Modulation) und der Szenenbestandteile (z.B. umherfliegende Späne, aufgewirbelter Staub) erlauben.

Des Weiteren können manche Ausführungsformen eine Verschmutzungen der Abbildungsoptik simulieren.

Ferner können manche Ausführungsformen eine Simulierung individueller Abbildungsfehler der Abbildungsoptik (z.B. nicht rotationssymmetrische Aberrationen, Bildfeldwölbungen) erlauben.

Des Weiteren können manchen Ausführungsformen Eigenschaften in zum sichtbaren Spektrum benachbarten Spektralbereichen (d.h. IR und UV) berücksichtigen.

Weitere Ausführungsformen können eine Kohärenz des Lichts der Beleuchtungsquelle berücksichtigen.

Die Berücksichtigung dieser Einflussquellen geschieht nun, indem die fotorealistischen Bilder mittels Operatoren aus der Bildverarbeitung so verändert werden, dass diese Operatoren die Auswirkungen der Einflussquellen möglichst physikalisch korrekt wiedergeben. Dazu können Ausführungsformen beispielsweise folgende Schritte durchführen:

In einem ersten Schritt kann eine Auswahl der zu berücksichtigenden Einflussquellen erfolgen:

Dazu können entsprechend der zu lösenden Bildverarbeitungsaufgabe und der dort sinnvollen Detaillierung der Bildgewinnung die zu berücksichtigenden Einflussfaktoren ausgewählt werden. Die Auswahl kann die zu erwartenden Einflüsse und die Stärke von deren Einfluss auf das erhaltene reale Bild berücksichtigen.

In einem zweiten Schritt kann eine Modellierung der Operatoren für alle zu berücksichtigenden Einflussquellen erfolgen:

Die Auswirkungen der Einflussquellen auf die fotorealistischen Bilder werden individuell für jede Einflussquelle modelliert und in Operatoren abgebildet. Beispielhaft lassen sich folgende Einflussquellen durch die beschriebenen Operatoren modellieren:

In einer Ausführungsform (a) kann eine detaillierte Modellierung der Abstrahlcharakteristik der Lichtquelle erfolgen. Dazu werden mehrere Idealbilder mit unterschiedlichen Lichtquellen so erzeugt, dass sich aus der Überlagerung der Lichtquellen (Summation der erzeugten Lichtfelder) die tatsächliche Abstrahlcharakteristik der Lichtquelle ergibt. Das Ergebnisbild erhält man durch Kombination, z.B. Summation, der einzelnen fotorealistischen Bilder.

In einer weiteren Ausführungsform (b) kann eine tiefengestaffelte Szene mit gewünschten Szenenobjekten und Störobjekten erzeugt werden: Dazu können mehrere fotorealistische Bilder erzeugt werden, bei denen die abgebildeten Objekte so abgebildet werden, als ob sie sich jeweils im Tiefenschärfebereich befinden würden. Anschließend wird die unscharfe Abbildung, die dadurch entsteht, dass sich die Objekte tatsächlich nicht im Tiefenschärfebereich befinden, durch eine Faltung mit einer tiefenabhängigen Aperturfunktion berücksichtigt. Das Ergebnisbild erhält man durch eine Kombination, z.B. Summation der fotorealistischen Bilder, wobei noch die Sichtbarkeit der einzelnen Szenenbestandteile berücksichtigt werden kann.

Gemäß einer weiteren Ausführungsform (c) kann eine Dynamik des Beleuchtungssystems und der Szenenbestandteile berücksichtigt werden. Dazu werden mehrere fotorealistische Bilder erzeugt, welche die Szene mit unterschiedlichen Positionen des Beleuchtungssystems und der beweglichen Szenenbestandteile abbildet. Wie bei b. wird eine unscharfe Abbildung berücksichtigt und das Ergebnisbild durch Kombination, z.B. Summation der fotorealistischen Bilder unter Berücksichtigung von Sichtbarkeitsbedingungen erhalten.

In einer weiteren Ausführungsform (d) können Verschmutzungen der Abbildungsoptik simuliert werden. Solche Einflüsse resultieren je nach Position der Verschmutzung im Linsensysteme in einer additiven Überlagerung des stark unscharf abgebildeten Schmutzes (wenn sich der Schmutz vor der Linse bzw. auf der Frontlinse befindet) oder einer Veränderung der Aperturfunktion zur Berücksichtigung der Aperturblende (wenn sich der Schmutz im Linsensystem in der Ebene der Aperturblende befindet). Der Operator ist demnach ein additiver Operator im ersten Fall oder ein Faltungsoperator im zweiten Fall, wobei je nach Position des Schmutzes auch Zwischenstufen bzw. Überlagerungen dieser beiden Operatoren sinnvoll sind.

Ferner können in einer weiteren Ausführungsform individuelle Abbildungsfehler (e) der Abbildungsoptik simuliert werden. Da die Auswirkungen solcher Fehler von der Blickrichtung bzw. der daraus resultierenden Position im Bild abhängen, lassen sie sich nur durch ortsvariante Operatoren berücksichtigen. Die Operatoren bewirken eine Verschmierung (z.B. modelliert durch eine Faltung des Bildinhalts mit einem Faltungskern), die in Abhängigkeit von der Bildposition angepasst wird. Bildfeldwölbungen bewirken ebenfalls eine Verunschärfung der Abbildung in Abhängigkeit von der Bildposition. Zur Berücksichtigung individueller Abbildungsfehler werden die Eigenschaften der Abbildungsoptik einmalig für jedes Abbildungssystem bestimmt.

Beispielsweise in einem dritten Schritt kann eine Festlegung der Parameter für die Operatoren erfolgen.

Alle Einflussquellen, für deren Berücksichtigung in Schritt 2 Operatoren verwendet werden, besitzen Parameter. Dies sind z.B. die Positionen, Strahlungsleistungen und Abstrahlcharakteristika für die o.g. Einflussquelle a, die Abstände der Szenenbestandteile für b, Geschwindigkeiten der Beleuchtung und der Szenenbestandteile für c, die Filterfunktionen und Überlagerungsoperatoren für d sowie die ortsabhängigen Verunschärfungsoperatoren im Fall e. Die Parameter sind z.T. abhängig von der abgebildeten Szene (z.B. Fälle a, b und c) und z.T. abhängig vom verwendeten Abbildungssystem (z.B. Fälle d und e). Dementsprechend können die Parameter im letzteren Fall aus einer Datenbank für das Abbildungssystem entnommen werden, währen die Parameter für den ersteren Fall aus der Szenenmodellierung bestimmt werden.

Beispielsweise in einem vierten Schritt kann eine Anwendung der Operatoren auf die fotorealistischen Bilder erfolgen. So können die beispielsweise in dem zweiten Schritt und dritten Schritt ausgewählten und parametrierten Operatoren zur Berücksichtigung der Einflussquellen abschließend auf das fotorealistische Bild angewendet werden. Die Reihenfolge der Anwendung der Operatoren richtet sich dabei nach der physikalischen Realität: Zunächst werden diejenigen Operatoren angewendet, die Szeneneinflüsse berücksichtigen, anschließend kommen die Operatoren zum Einsatz, die Einflüsse aus dem Abbildungssystem berücksichtigen.

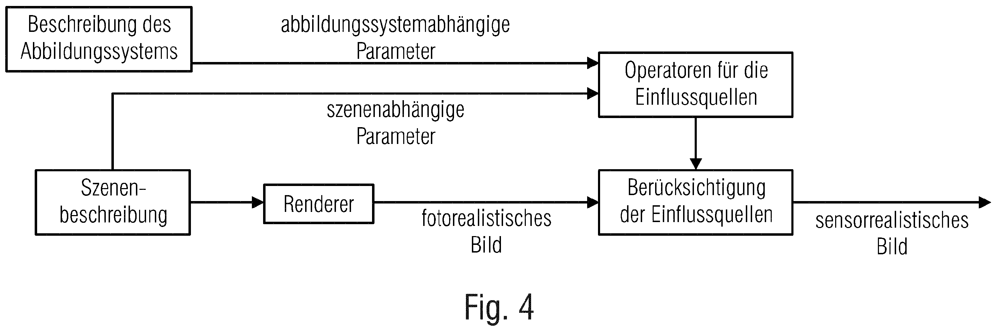

Fig. 4 zeigt die oben beschriebene Vorgehensweise zur Erzeugung eines Ergebnisbildes aus einem fotorealistischem Bild als ein beispielhaftes Ablaufdiagramm. Die Reihenfolge der Schritte "Beschreibung des Abbildungssystems", "Operatoren für die Einflussquellen" und "Berücksichtigung der Einflussquellen" kann dabei anders gruppiert werden und beispielsweise in nur in einem einzigen Schritt durchgeführt werden. Beispielsweise kann auch die Beschreibung des Abbildungssystems bereits vorgegeben sein.

Gemäß den obigen Darstellungen kann in einer Ausführungsform die Vorrichtung ausgebildet sein, ein Vorhandensein von zwei oder mehreren Lichtquellen zu simulieren. Dabei kann die Bilderzeugungseinheit 140 ausgebildet sein, zwei oder mehrere erste Bilder zu erzeugen, wobei die Bilderzeugungseinheit 140 ausgebildet ist, jedes erste Bild der zwei oder mehreren ersten Bilder so zu erzeugen, dass für dieses erste Bild ein Vorhandensein von nur einer der zwei oder mehreren Lichtquellen simuliert wird. Die Bilderzeugungseinheit 140 kann dabei ausgebildet sein, das Ergebnisbild durch Summation der zwei oder mehreren ersten Bilder zu erzeugen.

Wie oben beschrieben, kann die Bilderzeugungseinheit 140 gemäß einer Ausführungsform ausgebildet sein, zwei oder mehrere erste Bilder zu erzeugen, wobei die Bilderzeugungseinheit 140 ausgebildet ist, jedes erste Bild der zwei oder mehreren ersten Bilder so zu erzeugen, dass sich die ein oder mehreren Objekte in einem Tiefenschärfebereich befinden. Dabei kann die Bilderzeugungseinheit 140 ausgebildet sein, das Ergebnisbild durch Summation der zwei oder mehreren ersten Bilder zu erzeugen.

Ferner kann die Bilderzeugungseinheit 140, wie oben dargestellt, in einer Ausführungsform ausgebildet sein, zwei oder mehrere erste Bilder zu erzeugen, wobei die Bilderzeugungseinheit 140 ausgebildet ist, dass für wenigstens eine der zwei oder mehreren Lichtquellen simuliert wird, dass sich diese wenigstens eine Lichtquelle in jedem ersten Bild der zwei oder mehreren ersten Bilder an einer unterschiedlichen Position befindet. Dabei kann die Bilderzeugungseinheit 140 ausgebildet ist, das Ergebnisbild durch Summation der zwei oder mehreren ersten Bilder zu erzeugen.

Des Weiteren kann die Bilderzeugungseinheit 140 in einer Ausführungsform, wie oben beschrieben, ausgebildet sein, zwei oder mehrere erste Bilder derart zu erzeugen, indem jedem der zwei oder mehreren ersten Bilder eine Simulation von unscharf abgebildetem Schmutz hinzugefügt wird. Dabei kann die Bilderzeugungseinheit 140 ausgebildet sein, das Ergebnisbild durch Summation oder durch eine Faltung der zwei oder mehreren ersten Bilder zu erzeugen.

In einer weiteren Ausführungsform kann die Bilderzeugungseinheit 140, wie oben dargestellt, ausgebildet sein, einen Bildinhalt von wenigstens einem der ein oder mehreren ersten Bilder mit einem Faltungskern zu falten.

Manche der Ausführungsformen der Fig. 3 können beispielsweise die weiter oben beschriebenen ein oder mehreren Zusatzparameter aufweisen. So können beispielsweise solche ein oder mehreren Zusatzparameter den Degenerationseffekt spezifizieren, der simuliert wird. In manchen Ausführungsformen kann die Vorrichtung der Fig. 3 also zusätzlich zu den ein oder mehreren Kamerasystemparametern und zusätzlich zu den ein oder mehreren Beleuchtungssystemparameter der ein oder mehreren Lichtquellen und zusätzlich zu den ein oder mehreren Objektparameter der ein oder mehreren Objekte zur Einstellung von ein oder mehreren Zusatzparametern ausgebildet ist. Dabei kann die Bilderzeugungseinheit 140 ausgebildet sein, das Ergebnisbild oder wenigstens eines der ein oder mehreren ersten Bilder unter Verwendung von den ein oder mehreren Zusatzparametern zu erzeugen. Wenigstens einer der ein oder mehreren Zusatzparameter kann dabei von einem Störungseffekt oder von einem Effekt bedingt durch nichtideale Eigenschaften des Kamerasystems oder des Beleuchtungssystems abhängen, verursacht z.B. durch eine Alterung des Sensors, oder verursacht, z.B. durch eine Alterung der ein oder mehreren Beleuchtungseinheiten.

Nachfolgend werden weitere Ausführungsformen dargestellt. Diese weiteren Ausführungsformen stellen verbesserte Konzepte bereit, um das Reflexions- und Transmissionsverhalten von Materialien zu beschreiben.

Das Reflexions- bzw. Transmissionsverhalten von Materialien wird beispielsweise mittels goniometrischer Messtechnik bei gerichteter Beleuchtung ermittelt und erzeugt Datensätze des orts- und raumrichtungsabhängigen Reflexions- bzw. Transmissionsverhaltens, was einer Funktion $f_r(\Theta_i,\Phi_i,\Theta_o,\Phi_o)$ mit vier Parametern (BRDF, BTDF zusammengefasst auch BSDF = bidirectional scattering distribution function genannt) entspricht bzw. einer Funktion $f_r(\Theta_i,\Phi_i,\Theta_o,\Phi_o,\lambda)$ mit fünf Parametern, wenn die Wellenlängen $\lambda$ des Lichts berücksichtigt wird bzw. einer Funktion $f_r(\Theta_i,\Phi_i,\Theta_o,\Phi_o,\lambda,x_e,y_e)$ mit sieben Parametern (BSSRDF = bidirectional scattering-surface reflectance distribution function), wenn die Wellenlänge $\lambda$ und der Ort des Lichtaustritts berücksichtigt werden.

Die BRDF bezeichnet eine Bidirektionale Reflektanzverteilungsfunktion. Die BTDF bezeichnet eine Bidirektionale Transmissionsverteilungsfunktion.

Beispielsweise können die Bidirektionale Reflektanzverteilungsfunktion bzw. Bidirektionale Transmissionsverteilungsfunktion ein Verhältnis von ausgehendem Licht zu einfallendem Licht angeben. Ausgabe der Bidirektionalen Reflektanzverteilungsfunktion bzw. der Bidirektionalen Transmissionsverteilungsfunktion kann also beispielsweise ein Wert y=fr(...) sein, wobei beispielsweise $0 \leq y < 1$ gelten kann.

Bei $\Theta_i$ handelt es sich dabei um den Zenith-Winkel eines einfallenden Lichtstrahls.

Bei $\Phi_i$ handelt es sich dabei um den Azimuth-Winkel des einfallenden Lichtstrahls.

Bei $\Theta_o$ handelt es sich dabei um den Zenith-Winkel eines ausgehenden Lichtstrahls.

Bei $\Phi_o$ handelt es sich dabei um den Azimuth-Winkel des ausgehenden Lichtstrahls.

$\lambda$ spezifiziert die Wellenlänge des Lichts.

$x_e$ spezifiziert eine x-Position auf dem Objekt, von der der ausgehende Lichtstrahl ausgeht.

$y_e$ spezifiziert eine y-Position auf dem Objekt, von der der ausgehende Lichtstrahl ausgeht.

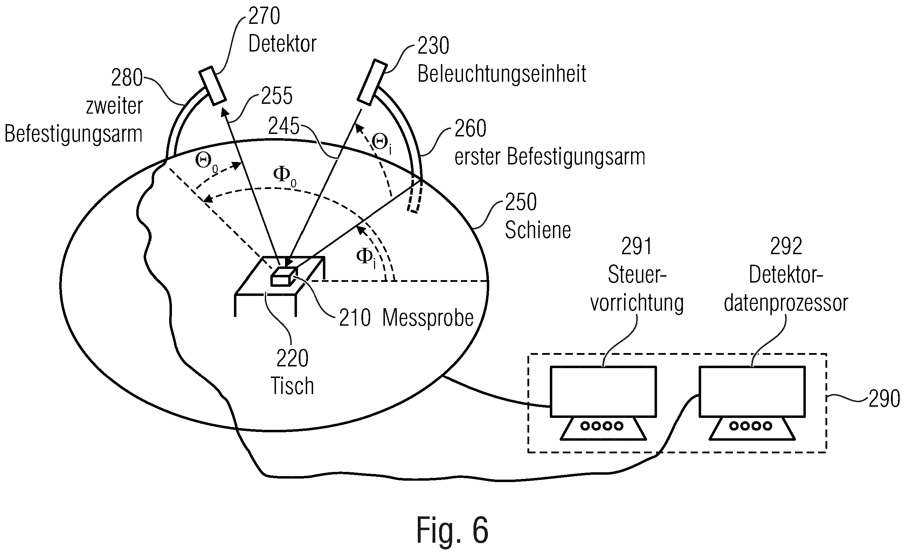

Fig. 6 zeigt eine geeignete Messanordnung, die zur Ermittlung der Bidirektionalen Reflektanzverteilungsfunktion geeignet ist.

Eine Messprobe 210 liegt auf einem Tisch 220. Die Messprobe wird von einem Beleuchtungssystem 230 beleuchtet. Das Beleuchtungssystem kann entlang einer Schiene 250 um den Tisch 220, auf dem sich die Messprobe 210 befindet, gedreht werden. Eine solche Drehung um die Messprobe ist eine Drehung des Beleuchtungssystems 230 um den Tisch 220 mit der Messprobe 210 in der horizontalen Ebene. Sie spezifiziert den Azimuth-Winkel $\Phi_i$ eines einfallenden Lichtstrahls 245.

Zusätzlich kann das Beleuchtungssystem 230, die sich an einem ersten Befestigungsarm 260 befindet, in der Höhe verstellt werden. Die Position des Beleuchtungssystems 230 in der Höhe spezifiziert den Zenith-Winkel $\Theta_i$ des einfallenden Lichtstrahls 245.

Des Weiteren ist ein Detektor 270 vorgesehen, der beispielsweise entlang einer Schiene 250 um den Tisch 220, auf dem sich die Messprobe 210 befindet, gedreht werden kann. Eine solche Drehung um die Messprobe 210 ist eine Drehung des Detektors 270 um den Tisch 220 mit der Messprobe 210 in der horizontalen Ebene. Sie spezifiziert den Azimuth-Winkel $\Phi_o$ eines ausgehenden Lichtstrahls 255, der von der Messprobe 210 reflektiert wurde.

Zusätzlich kann der Detektor 270, die sich an einem zweiten Befestigungsarm 280 befindet, in der Höhe verstellt werden. Die Position des Detektors 270 in der Höhe spezifiziert den Zenith-Winkel $\Theta_o$ des ausgehenden Lichtstrahls 255.

Eine Steuervorrichtung 291 erlaubt, die Position des Beleuchtungssystems 230 einzustellen. D.h. mittels der Steuervorrichtung 291 kann der Azimuth-Winkel des Beleuchtungssystems 230 und damit der Azimuth-Winkel $\Phi_i$ des einfallenden Lichtstrahls 245 eingestellt werden; und ebenso kann mittels der Steuervorrichtung 291 der Zenith-Winkel des Beleuchtungssystems 230 und damit der Zenith-Winkel $\Theta_i$ des einfallenden Lichtstrahls 245 eingestellt werden.

Ferner erlaubt die Steuervorrichtung 291, die Position des Detektors 270 einzustellen. D.h. mittels der Steuervorrichtung 291 kann der Azimuth-Winkel des Detektors 270 und damit der Azimuth-Winkel $\Phi_o$ des ausgehenden Lichtstrahls 255 eingestellt werden, der vom Detektor 270 erfasst wird. Ebenso kann mittels der Steuervorrichtung 291 der Zenith-Winkel des Detektors 270 und damit der Zenith-Winkel $\Theta_o$ des ausgehenden Lichtstrahls 255 eingestellt werden, der von dem Detektor 270 erfasst wird. Es versteht sich, dass als Folge der Reflektion des eingehenden Lichtstrahls 245 in der Regel eine Vielzahl von Lichtstrahlen vom Messobjekt 210 ausgehen. Was mittels der Einstellung des Detektors 270 eingestellt wird, ist also der Azimuth-Winkel $\Phi_o$ und der Zenith-Winkel $\Theta_o$ desjenigen reflektierten Lichtstrahls 255, der vom Detektor 270 erfasst wird.

Die Steuervorrichtung 291 kann in manchen Ausführungsformen dafür ausgelegt sein, die Wellenlänge $\lambda$ des Lichts einzustellen, das von dem Beleuchtungssystem 230 ausgestrahlt wird.

Ein Detektordatenprozessor 292 empfängt die Messdaten vom Detektor 270 (z.B. ein Kamerasystem). Der Detektordatenprozessor 292 kann ausgebildet sein, die Messdaten vom Detektor 270 zu speichern und/oder weiterzuverarbeiten und/oder einem Benutzer auszugeben.

So kann der Detektordatenprozessor 292 ausgebildet sein, von dem Detektor 270 beispielsweise eine Messung der Lichtintensität des Lichtstrahls 255 zu erhalten. Der Detektordatenprozessor 292 kann dann ausgelegt sein, einen Ausgabewert der Bidirektionalen Reflektanzverteilungsfunktion zu den gegebenen Parameter-Eingabewerten zu bestimmen.

Die Steuervorrichtung 291 und der Detektordatenprozessor 292 können getrennt voreinander realisiert sein. In anderen Ausführungsformen können Steuervorrichtung 291 und Detektordatenprozessor 292 in einer Steuer- und Empfangseinheit 290 zusammen realisiert sein.

Der erste Befestigungsarm 260 und der zweite Befestigungsarm können sich auf derselben Schiene 250 oder auf zwei voneinander getrennten Schienen befinden. In anderen Ausführungsformen sind andere Ausgestaltungen statt Schienen und/oder Befestigungsarmen vorgesehen, um die Position des Beleuchtungssystems 230 und des Detektors 270 einzustellen.

Die Messanordnung der Fig. 6 kann ebenfalls zur Messung der Bidirektionalen Transmissionsverteilungsfunktion vorgesehen sein. Hierzu müssen Beleuchtungssystem 230 und Detektor 270 lediglich so zueinander positionierbar sein, dass der Detektor solche Lichtstrahlen detektiert, die die Messprobe 210 durchdrungen haben. Statt Lichtstrahlen zu detektiert, die vom Messprobe 210 reflektiert wurden, ist der Detektor 270 oder die Beleuchtungssystem 230 also so zu positionieren, dass der Detektor 270 Lichtstrahlen detektiert, die die Messprobe durchdrungen haben.

Statt den Tisch 220, auf dem die Messprobe 210 liegt, als eine Haltevorrichtung für die Messprobe zu verwenden, kann eine andere geeignete Haltevorrichtung verwendet werden, die erlaubt, dass Lichtstrahlen, die das Messobjekt 210 von der Lichtquelle kommend, durchdringen, ohne Störungen den Detektor 270 erreichen.

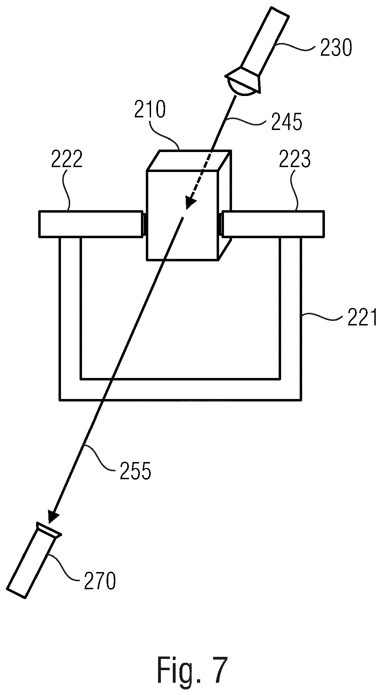

Fig. 7 zeigt eine solche Haltevorrichtung 221, bei der die Messprobe 210 zwischen zwei, beispielsweise metallischen, Backen 222, 223 der Haltevorrichtung 221 eingespannt ist.

Ein vor dem Beleuchtungssystem 230 emittierter Lichtstrahl 245 fällt auf der Messprobe 210 ein, durchdringt die Messprobe 210 und geht (unter anderem) als von der Messprobe 210 ausgehende Lichtstrahl 255 von der Messprobe aus, und wird schließlich von dem Detektor 270 aufgenommen.

Des Weiteren stellen Ausführungsformen verbesserte Konzepte bereit, um die Abstrahlcharakteristika von mehr oder weniger ausgedehnten Lampen zu bestimmen.

Die Abstrahlcharakteristika von mehr oder weniger ausgedehnten Lampen bzw. Leuchten kann mittels goniometrischer Nahfeldmesstechnik ermittelt werden. Hierdurch werden Datensätze der orts- und raumrichtungsabhängigen Lichtintensitätsverteilung erzeugt, was einer Funktion $I_r(\Theta_o, \Phi_o, x_e, y_e)$ mit vier Parametern bzw. einer Funktion $I_r(\Theta_o, \Phi_o, x_e, y_e, \lambda)$ mit fünf Parametern entspricht, wenn die Wellenlängen $\lambda$ des Lichts berücksichtigt werden.

Bei $\Theta_o$ handelt es sich dabei um den Zenith-Winkel des von der Leuchte ausgehenden Lichtstrahl.

Bei $\Phi_o$ handelt es sich dabei um den Azimuth-Winkel des von der Leuchte ausgehenden Lichtstrahls.

$x_e$ spezifiziert eine x-Position auf der Leuchte, von der der ausgehende Lichtstrahl ausgeht.

$y_e$ spezifiziert eine y-Position auf dem Leuchte, von der der ausgehende Lichtstrahl ausgeht.

$\lambda$ spezifiziert die Wellenlänge des Lichts.

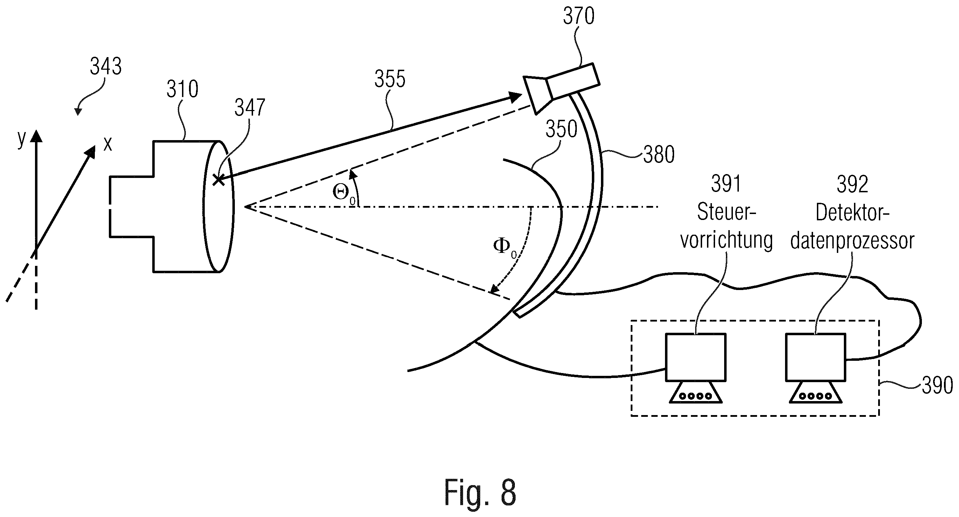

Fig. 8 zeigt eine Messanordnung, die zur Ermittlung der Bidirektionalen Transmissionsverteilungsfunktion geeignet ist.

In Fig. 8 ist eine Leuchte 310 dargestellt.

Des Weiteren ist ein Detektor 370 vorgesehen, der beispielsweise entlang einer Schiene 350 um die Leuchte 310 herum gedreht werden kann. Eine solche Drehung um die Leuchte 310 ist eine Drehung des Detektors 370 in der horizontalen Ebene. Die Drehung spezifiziert den Azimuth-Winkel $\Phi_o$ eines ausgehenden Lichtstrahls 355, der von der Leuchte 310 ausgeht.

Zusätzlich kann der Detektor 370, die sich an einem Befestigungsarm 380 befindet, in der Höhe verstellt werden. Die Position des Detektors 370 in der Höhe spezifiziert den Zenith-Winkel $\Theta_o$ des ausgehenden Lichtstrahls 355.

Ferner ist in Fig. 8 ein virtuelles Koordinatensystem 343 eingezeichnet. Die Position 347 des Punktes, von der der Lichtstrahl 355 ausgeht, der von dem Detektor erfasst wird, lässt sich durch seine x-Position $x_e$ und seine y-Position $y_e$ in dem virtuellen Koordinatensystem 343 angeben.

Eine Steuervorrichtung 391 erlaubt, die Position des Detektors 370 einzustellen. D.h. mittels der Steuervorrichtung 391 kann der Azimuth-Winkel des Detektors 370 und damit der Azimuth-Winkel $\Phi_o$ des ausgehenden Lichtstrahls 355 eingestellt werden, der vom Detektor 370 erfasst wird. Ebenso kann mittels der Steuervorrichtung 391 der Zenith-Winkel des Detektors 370 und damit der Zenith-Winkel $\Theta_o$ des ausgehenden Lichtstrahls 355 eingestellt werden, der von dem Detektor 370 erfasst wird. Wiederum versteht sich, dass von der Leuchte 310 eine Vielzahl von Lichtstrahlen ausgehen. Was mittels der Einstellung des Detektors 370 eingestellt wird, ist also der Azimuth-Winkel $\Phi_o$ und der Zenith-Winkel $\Theta_o$ desjenigen reflektierten Lichtstrahls 355, der vom Detektor 370 erfasst wird.

Die Steuervorrichtung 391 kann in manchen Ausführungsformen dafür ausgelegt sein, die Wellenlänge $\lambda$ des Lichts einzustellen, das von der Leuchte 310 ausgestrahlt wird.

Ein Detektordatenprozessor 392 empfängt die Messdaten vom Detektor 370 (z.B. ein Kamerasystem). Der Detektordatenprozessor 392 kann ausgebildet sein, die Messdaten vom Detektor 370 zu speichern und/oder weiterzuverarbeiten und/oder einem Benutzer auszugeben.

Der Detektordatenprozessor 392 kann ausgebildet sein, von dem Detektor 370 beispielsweise eine Messung der Lichtintensität des Lichtstrahls 355 zu erhalten. Der Detektordatenprozessor 392 ist dazu ausgelegt, einen Ausgabewert der Bidirektionalen Transmissionsverteilungsfunktion zu den gegebenen Parameter-Eingabewerten zu bestimmen.

Die Steuervorrichtung 391 und der Detektordatenprozessor 392 können getrennt voreinander realisiert sein. In anderen Ausführungsformen können Steuervorrichtung 391 und Detektordatenprozessor 392 in einer Steuer- und Empfangseinheit 390 zusammen realisiert sein.

In anderen Ausführungsformen sind andere Ausgestaltungen einer Schiene 350 und/oder einem Befestigungsarm 380 vorgesehen, um die Position des Detektors 370 einzustellen.

Üblicherweise werden in der Praxis die Intensitätsverteilungen von Lampen bzw. Leuchten in Form von IES (Illuminating Engineering Society) Dateien bereitgestellt. Die Anzahl ihrer Daten ist abhängig von der Ausdehnung der Lampen bzw. Leuchten, der Anzahl der Messpunkte $n$ auf den Lampen bzw. Leuchten und der Anzahl der Winkelstellungen der Messungen. Für eine Abtastung des Vollraums in 5° Schritten ergeben sich 36 x 72 Messwerte pro Messpunkt, d.h. bei $n$ Messpunkten ca. $n \cdot 2.600$ Messwerte multipliziert mit allen berücksichtigten Wellenlängen $\lambda$, d.h. die Beschreibung der Abstrahlcharakteristik von mehr oder weniger ausgedehnten Lampen bzw. Leuchten wird für großes $n$ komplex. Daher wird die Abstrahlcharakteristik von mehr oder weniger ausgedehnten Lampen bzw. Leuchten für das Raytracing-Verfahren häufig durch mathematische Funktionen oder nur durch Geometrieangaben und Konstanten (z.B. Lambert'scher Strahler, homogene Intensitätsverteilung etc.) idealisiert, wodurch die physikalische Korrektheit der Bildsimulation beeinträchtigt wird.

Diese Daten können in Form von Dateien mit Messdaten bereitgestellt werden. Für eine Abtastung des Halbraums in 5° Schritten ergeben sich ca. 1.300 x 1.300 = 1.690.000 Messwerte für die BRDF bzw. BTDF multipliziert mit allen berücksichtigten Wellenlängen $\lambda$ multipliziert mit allen berücksichtigten Orten des Lichtaustritts (BSSRDF), d.h. die BRDF bzw. BTDF sind extrem komplex. Aus diesem Grund werden die BRDF bzw. die BTDF praktisch immer durch mehr oder weniger physikalisch korrekte, mathematische Funktionen approximiert, wodurch die physikalische Korrektheit der Bildsimulation jedoch erheblich leidet.

Die Abstrahlcharakteristika von real existierenden, mehr oder weniger ausgedehnten Lampen bzw. Leuchten und das Reflexions- bzw. Transmissionsverhalten von realen Materialien (BRDF bzw. BTDF) können goniometrisch gemessen und in Form von umfangreichen Messdaten bereitgestellt werden. Für die Nutzung dieser Daten in Raytracing-Verfahren werden diese Daten üblicherweise durch mehr oder weniger physikalisch korrekte, mathematische Funktionen approximiert/modelliert, wobei insbesondere für das Reflexions- bzw. Transmissionsverhalten einzelner Materialien materialspezifische Approximationen/Modelle sinnvoll sind, d.h. es sind bisher keine allgemeingültigen, parametrierbaren Modelle für die Abstrahlcharakteristika ausgedehnter Lampen und Leuchten bzw. für das Reflexions- bzw. Transmissionsverhalten beliebiger Materialien bekannt, die das jeweilige Verhalten mit ausreichender Realitätstreue wiedergeben.

Ausführungsformen der Erfindung bestehen nun darin, trainierbare Systeme, speziell künstliche neuronale Netze für die Modellierung der Abstrahlcharakteristika von beliebigen, real existierenden, mehr oder weniger ausgedehnten Lampen und Leuchten bzw. für die Modellierung des Reflexions- bzw. Transmissionsverhalten von beliebigen, real existierenden Materialien zu verwenden.

Künstliche neuronale Netze zeichnen sich unter anderem dadurch aus, dass sie zur Interpolation komplexer Funktionen geeignet sind und dass sie trotz stichprobenartiger Trainingsdaten zur Verallgemeinerung fähig sind. Ferner ist die Erzeugung von Ausgangsdaten mittels Propagierungsfunktion in trainierten Netzen verhältnismäßig effizient (Matrix-Vektor Multiplikation, sehr effizient auf GPU berechenbar). Des Weiteren ist ihre Topologie unabhängig von der Implementierung der Lern- und Propagierungsfunktion und üblicherweise in Form einer Netz-Konfigurationsdatei inklusive der Gewichtsfaktoren gespeichert. Die Netz-Konfigurationsdatei des trainierten Netzes stellt demzufolge ein Datenaustauschformat für ein gegebenes Problem dar.

Dabei werden in Ausführungsformen künstliche neuronale Netze eingesetzt, wobei es sich bei den neuronalen Netzen um Datenstrukturen handelt, die aus mehreren (beispielsweise mindestens drei) Schichten von, miteinander verbundenen künstlichen Neuronen bestehen, wobei beispielsweise die Verbindungen sogenannte Gewichtsfaktoren und die Neuronen beispielsweise eine Propagierungs-, eine Aktivierungs- und Ausgabefunktion besitzen, wobei es eine Eingabe- und eine Ausgabeschicht gibt.

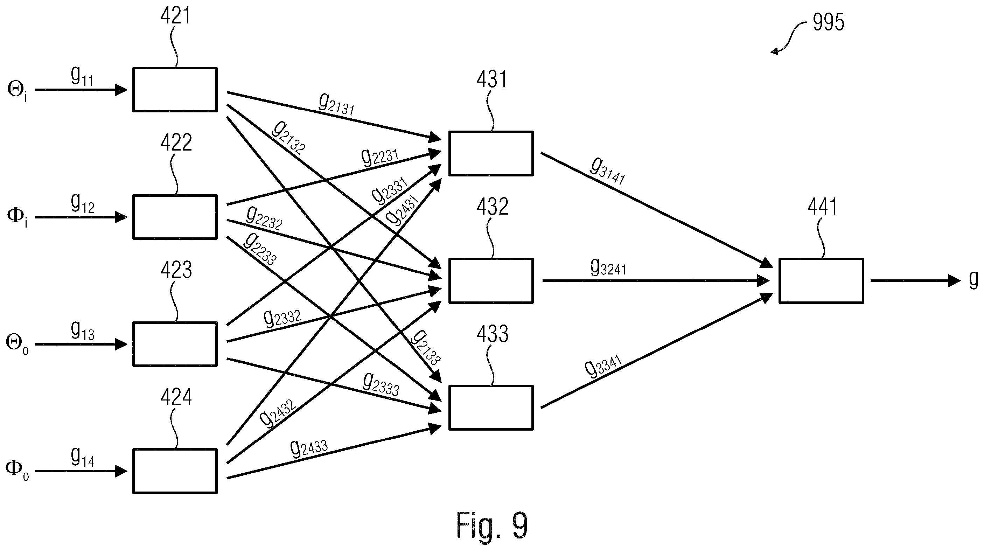

Fig. 9 zeigt ein neuronales Netz 995 gemäß einer Ausführungsform. So erhält das neuronale Netz 995 die Winkel der Fig. 6 als Eingaben, nämlich $\Theta_i$: den Zenith-Winkel eines einfallenden Lichtstrahls; $\Phi_i$: den Azimuth-Winkel des einfallenden Lichtstrahls; $\Theta_o$: den Zenith-Winkel eines ausgehenden Lichtstrahls; und $\Phi_o$: den Azimuth-Winkel des ausgehenden Lichtstrahls.

Die in Fig. 9 dargestellten Kästchen 421, 422, 423, 424, 431, 432, 433, 441 stellen Neuronen dar. Jeder Pfeil, der in eines der Neuronen einläuft, ist mit einem Gewicht belegt, in Fig. 9 die Gewichte $g_{11}$, $g_{12}$, $g_{13}$, $g_{14}$, $g_{2131}$, $g_{2132}$, $g_{2133}$, $g_{2231}$, $g_{2232}$, $g_{2233}$, $g_{2331}$, $g_{2332}$, $g_{2333}$, $g_{2431}$, $g_{2432}$, $g_{2433}$, $g_{3141}$, $g_{3241}$, $g_{3341}$. Die von einem Neuron kommenden Ausgaben werden grundsätzlich zunächst mit dem jeweiligen Gewicht gewichtet, beispielsweise multipliziert, bevor sie ins nächste Neuron eingespeist werden.

Das jeweilige Neuron 421, 422, 423, 424, 431, 432, 433, 441 legt fest, durch welche Funktionen bzw. durch welche (Gesamt-)Funktion die (gewichteten) Eingangswerte des jeweiligen Neurons in einen Ausgangswert umgesetzt werden.

Das neuronales Netz 995 lernt dabei, indem die Gewichte des neuronalen Netzes 995 angepasst werden, in Fig. 9 die Gewichte $g_{11}$, $g_{12}$, $g_{13}$, $g_{14}$, $g_{2131}$, $g_{2132}$, $g_{2133}$, $g_{2231}$, $g_{2232}$, $g_{2233}$, $g_{2331}$, $g_{2332}$, $g_{2333}$, $g_{2431}$, $g_{2432}$, $g_{2433}$, $g_{3141}$, $g_{3241}$, $g_{3341}$. So stehen dem neuronalen Netz 995 eine Vielzahl von Trainingsdaten zur Verfügung, wobei jeder Trainingsdatensatz die Eingangsparameter (in Fig. 9: $\Theta_i$; $\Phi_i$; $\Theta_o$; $\Phi_o$) und den Ausgabewert (in Fig. 9: y) umfasst. Die Gewichte werden von neuronalen Netz (z.B. mit jedem weiteren Trainingssatz fortlaufend) angepasst.

Hierdurch lernt das neuronale Netz 995 für neue Eingangsparameter, welcher Ausgabewert auszugeben ist, indem die zuvor mit den Trainingsdaten angepassten Gewichte zur Berechnung des Ausgabewerts verwendet werden.

Oftmals umfasst ein Neuron die drei hintereinandergeschalteten Funktionen Propagierungsfunktion, Aktivierungsfunktion und Ausgabefunktion. Beispielsweise verknüpft die Propagierungsfunktion die gewichteten Eingänge des Neurons miteinander, beispielsweise durch deren Aufsummieren. Die Aktivierungsfunktion kann dann bestimmen, beispielsweise in Abhängigkeit eines Eingabewerts, ob das Ergebnis der Propagierungsfunktion an die Ausgabefunktion weitergegeben wird oder beispielsweise auf Null gesetzt wird. Die Ausgabefunktion kann dann dafür ausgelegt sein, die von der Aktivierungsfunktion erhaltene Eingabe nochmals weiterzuverarbeiten und auszugeben.

Für das (überwachte) Training solcher Strukturen existieren sogenannte Lernverfahren, mit denen das neuronale Netz 995, genauer gesagt die Gewichtsfaktoren so modifiziert werden, dass sie zu einem Satz von Trainings-Eingangsdaten die gewünschte Netz-Ausgangsdaten liefern. Ein trainiertes neuronales Netz ist dann in der Lage, aus Eingangsdaten, die ähnlich den Trainings-Eingangsdaten sind, die entsprechenden Ausgangsdaten ähnlich den gewünschte Netz-Ausgangsdaten mittels einer Propagierungsfunktion zu generieren.

Die Ausführungsformen der Erfindung nutzen nun die Eingabeparameter und Ausgangsdaten, die durch die Messvorrichtung einer der Fig. 6, Fig. 7 und Fig. 8 gewonnen wurden, um ein neuronales Netz 995 zu trainieren. Als Ausgangsdaten liefert der Detektordatenprozessor 292; 392 entweder den vom Detektor 270; 370 direkt gelieferten Wert, beispielsweise einen Lichtstärkewert oder aber einen von dem vom Detektor 270; 370 gelieferten Wert abgeleiteten Wert, wie das Ergebnis der Bidirektionalen Reflektanzverteilungsfunktion bzw. das Ergebnis der Bidirektionalen Transmissionsverteilungsfunktion.

In Ausführungsformen, in denen die Eingangsparameter zusammen mit dem Ergebnis der Bidirektionalen Reflektanzverteilungsfunktion bzw. dem Ergebnis der Bidirektionalen Transmissionsverteilungsfunktion verwendet werden, fungiert das neuronale Netz 995 dann als die Bidirektionale Reflektanzverteilungsfunktion bzw. als die Bidirektionale Transmissionsverteilungsfunktion.

Nachdem das neuronale Netz 995 mit den von der jeweiligen Messvorrichtung gewonnen Daten trainiert wurde, wird das trainierte neuronale Netz dann dazu verwendet, um zu weiteren, anderen Kombinationen von Eingabeparametern den jeweiligen Ausgangswert zu berechnen.

Mit dem künstlichen neuronalen Netz 995 lassen sich die Abstrahlcharakteristika von mehr oder weniger ausgedehnten Lampen bzw. Leuchten anhand der goniometrischen Messdaten $I_r,\Theta_o,\Phi_o,x_e,y_e$ bzw. $I_r,\Theta_o,\Phi_o,x_e,y_e,\lambda$ trainieren, wobei $\Theta_o,\Phi_o,x_e,y_e$ bzw. $\Theta_o,\Phi_o,x_e,y_e,\lambda$ die Netz-Eingangsdaten und $I_r$ die gewünschte Netzausgabe ist.

Ebenso lässt sich das Reflexions- bzw. Transmissionsverhalten von Materialien anhand der goniometrischen Messdaten $f_r(\Theta_i,\Phi_i,\Theta_o,\Phi_o)$ bzw. $f_r(\Theta_i,\Phi_i,\Theta_o,\Phi_o,\lambda)$ bzw. $f_r(\Theta_i,\Phi_i,\Theta_o,\Phi_o,\lambda,x_e,y_e)$ trainieren, wobei $\Theta_i,\Phi_i,\Theta_o,\Phi_o$ bzw. $\Theta_i,\Phi_i,\Theta_o,\Phi_o,\lambda$ bzw. $\Theta_i,\Phi_i,\Theta_o,\Phi_o,\lambda,x_e,y_e$ die Netz-Eingangsdaten und $f_r$ die gewünschte Netzausgabe ist.

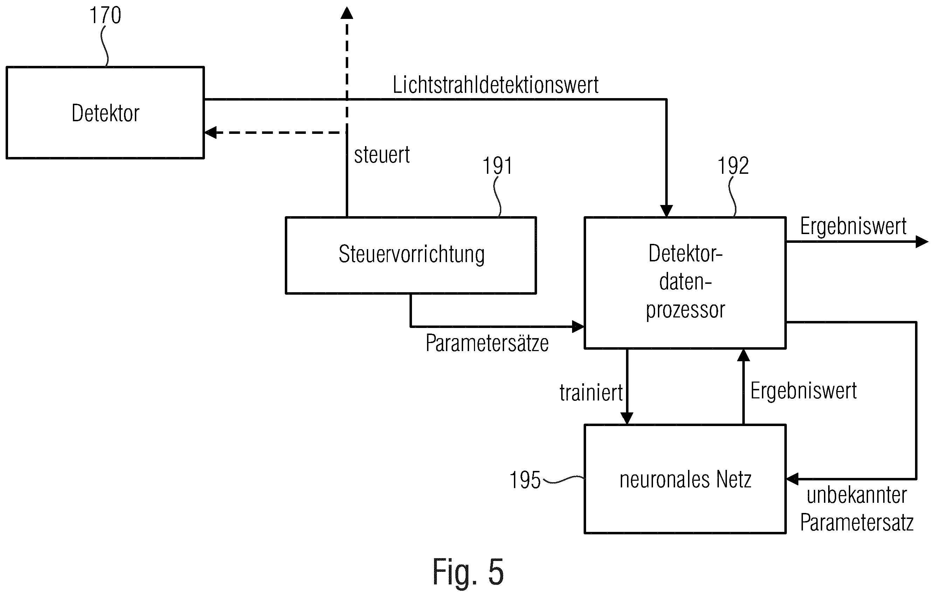

Fig. 5 zeigt ein allgemeines Ausführungsbeispiel, das basierend auf den obigen Konzepten ein System zur Ermittlung eines physikalischen Verhaltens eines Messobjekts oder einem Beleuchtungssystem oder einer Leuchte gemäß einer Ausführungsform zeigt.

Das System umfasst einen Detektor 170, eine Steuervorrichtung 191, einen Detektordatenprozessor 192 und ein neuronales Netz 195.

Die Steuervorrichtung 191 ist eingerichtet, nacheinander eine Mehrzahl von Parametersätzen einzustellen, wobei jeder Parametersatz der Mehrzahl von Parametersätzen jedem Parameter einer Gruppe von zwei oder mehr Parametern einen Parameterwert zuweist, wobei sich jedes Paar von zwei Parametersätzen der Mehrzahl von Parametersätzen in zumindest einem Parameterwert eines Parameters der Gruppe von Parametern unterscheidet. Des Weiteren ist die Steuervorrichtung 191 eingerichtet, für jeden Parametersatz der Mehrzahl von Parametersätzen, durch Einstellen des Parametersatzes zumindest den Detektor 170 oder das Beleuchtungssystem oder die Leuchte einzustellen (Beleuchtungssystem bzw. Leuchte sind in Fig. 5 nicht gezeigt; siehe aber das Beleuchtungssystem 230 der Fig. 6 und Fig. 7 und die Leuchte 310 der Fig. 8).

Der Detektor 170 ist ausgebildet, zu jedem von der Steuervorrichtung 191 eingestellten Parametersatz der Mehrzahl der Parametersätze, einen Lichtstrahl zu detektieren und einen Lichtstrahldetektionswert, der von dem Lichtstrahl abhängt, an den Detektordatenprozessor 192 auszugeben, wobei der Lichtstrahl von dem Beleuchtungssystem oder von der Leuchte abhängt.

Der Detektordatenprozessor 192 ist eingerichtet, jeden Parametersatz der Mehrzahl von Parametersätzen zu empfangen, der von der Steuervorrichtung 191 eingestellt wird, wobei der Detektordatenprozessor 192 eingerichtet ist, für jeden Parametersatz der Mehrzahl von Parametersätzen, von dem Detektor 170 den Lichtstrahldetektionswert zu diesem Parametersatz zu erhalten, wobei der Detektordatenprozessor 192 eingerichtet ist, zu jedem Parametersatz der Mehrzahl von Parametersätzen einen Ergebniswert zuzuordnen, der der Lichtstrahldetektionswert dieses Parametersatzes ist oder der von dem Lichtstrahldetektionswert dieses Parametersatzes abhängt.

Ferner ist der Detektordatenprozessor 192 eingerichtet, das neuronale Netz 195 mittels der Mehrzahl von Parametersätzen und mittels des Ergebniswerts jedes Parametersatzes der Mehrzahl von Parametersätzen zu trainieren.

Des Weiteren ist der Datendetektorprozessor 192 ausgebildet, durch Verwendung des neuronalen Netzes 195 zu einem Parametersatz, der nicht von der Mehrzahl der Parametersätze umfasst ist, einen Ergebniswert für diesen Parametersatz zu erzeugen und auszugeben.

Gemäß einer Ausführungsform kann die Steuervorrichtung 191 eingerichtet sein, für jeden Parametersatz der Mehrzahl von Parametersätzen, durch Einstellen des Parametersatzes zumindest den Detektor 170 oder das Beleuchtungssystem oder die Leuchte einzustellen, indem die Steuervorrichtung 191 wenigstens einen ersten Azimuth-Winkel oder einen ersten Zenith-Winkel des Detektors 170 einstellt, oder indem die Steuervorrichtung 191 wenigstens einen zweiten Azimuth-Winkel oder einen zweiten Zenith-Winkel des Beleuchtungssystems oder der Leuchte einstellt.

In einer Ausführungsform kann die Steuervorrichtung 191 eingerichtet sein, für jeden Parametersatz der Mehrzahl von Parametersätzen, den ersten Azimuth-Winkel und den ersten Zenith-Winkel des Detektors 170 einzustellen.

Gemäß einer Ausführungsform kann die Steuervorrichtung 191 eingerichtet sein, für jeden Parametersatz der Mehrzahl von Parametersätzen, den zweiten Azimuth-Winkel und den zweiten Zenith-Winkel des Beleuchtungssystems einzustellen.

In einer Ausführungsform kann das System ferner eine Haltevorrichtung (in Fig. 5 nicht gezeigt, siehe aber Tisch 220 in Fig. 6, der eine Haltevorrichtung ist, und Haltevorrichtung 221 in Fig. 7) aufweisen, auf der das Messobjekt (in Fig. 5 nicht gezeigt, siehe aber Messprobe 210 in Fig. 6 und Fig. 7, die ein Messobjekt ist) anbringbar ist, und wobei das System ferner das Beleuchtungssystem umfasst, wobei der von dem Detektor 170 zu jedem von der Steuervorrichtung 191 eingestellten Parametersatz der Mehrzahl der Parametersätze detektierte Lichtstrahl ein Lichtstrahl ist, der durch Reflektion eines von dem Beleuchtungssystem ausgesendeten Lichtstrahls an dem Messobjekt entsteht, das auf der Haltevorrichtung angebracht ist.

Erfindungsgemäß ist der Detektordatenprozessor 192 dazu eingerichtet, zu jedem Parametersatz der Mehrzahl von Parametersätzen den Ergebniswert als Ergebnis einer Bidirektionalen Reflektanzverteilungsfunktion abhängig von dem Lichtstrahldetektionswert des Parametersatzes zu berechnen.

In einer Ausführungsform kann das System ferner eine Haltevorrichtung aufweisen, auf der das Messobjekt anbringbar ist, und wobei das System ferner das Beleuchtungssystem umfasst, wobei der von dem Detektor 170 zu jedem von der Steuervorrichtung 191 eingestellten Parametersatz der Mehrzahl der Parametersätze detektierte Lichtstrahl ein Lichtstrahl ist, der dadurch entsteht, dass ein von dem Beleuchtungssystem ausgesendeter Lichtstrahls das Messobjekt transmittiert, das auf der Haltevorrichtung angebracht ist.

Gemäß einer Ausführungsform kann der Detektor 170 ausgebildet sein, zu jedem von der Steuervorrichtung 191 eingestellten Parametersatz der Mehrzahl der Parametersätze, einen Lichtstrahl zu detektieren, der von der Leuchte ausgestrahlt wird.

In einer Ausführungsform kann die Steuervorrichtung 191 eingerichtet sein, für jeden Parametersatz der Mehrzahl von Parametersätzen die Position auf der Leuchte einzustellen, so dass von der Position auf der Leuchte der Lichtstrahl ausgeht, der von dem Detektor 170 detektiert wird.

Gemäß einer Ausführungsform kann die Steuervorrichtung 191 eingerichtet sein, für jeden Parametersatz der Mehrzahl von Parametersätzen die Position auf der Leuchte einzustellen, indem zumindest eine x-Koordinatenposition und eine y-Koordinatenposition dieser Position eingestellt werden.

Gemäß einer Ausführungsform kann die Steuervorrichtung 191 eingerichtet sein, für jeden Parametersatz der Mehrzahl von Parametersätzen eine Position in einem Linearachssystem einzustellen, wobei der Detektor 170 ein Kamerasystem mit einem Matrix-Sensor sein kann.

In einer Ausführungsform kann die Steuervorrichtung 191 eingerichtet sein, für jeden Parametersatz der Mehrzahl von Parametersätzen eine Blendenzahl einzustellen.

Gemäß einer Ausführungsform kann die Steuervorrichtung 191 eingerichtet sein, für jeden Parametersatz der Mehrzahl von Parametersätzen einen Wellenlänge-Wert einzustellen, wobei eine Wellenlänge des Lichtstrahls, der von dem Detektor 170 detektiert wird, von dem Wellenlänge-Wert abhängt.

Neben der obigen realitätstreuen Modellierung der Abstrahlcharakteristika von mehr oder weniger ausgedehnten Lampen bzw. Leuchten und der obigen realitätstreuen Modellierung der Reflexions- bzw. Transmissionsverhalten von Materialien ist eine realitätstreue Modellierung der Abbildungseigenschaften von real existierenden Objektiven für eine möglichst hohe Realitätstreue des Ergebnisses der Raytracing-Verfahren wünschenswert. Bezüglich dieser Verfahren ist insbesondere die Kenntnis, welche Lichtstrahlen der realen Welt mit welcher Intensität auf welche Bildpunkte der bildseitigen Tiefenschärfeebene abgebildet werden, von Relevanz.

Um diesen Zusammenhang messtechnisch ermitteln zu können, stellen Ausführungsformen eine Messvorrichtung bereit, die mechanisch aus einem orthogonal zueinander angeordneten x/y-Linearachssystem und darauf angeordneten, goniometrischen Neigesystem für zwei orthogonal zueinander stehende Winkel $\Theta$, $\Phi$ und einer punktförmigen, bezüglich Linearachs- und Neigesystem ortsfest montierten Laserlichtquelle mit geringem Strahlquerschnitt besteht.

Eine mögliche, sinnvolle Anordnung des Linearachs-/Neigesystems zur Laserlichtquelle besteht darin, dass die Lichtquelle senkrecht auf die Neigeachsen des Neigesystems leuchtet, wenn sich dieses in der Mittellage des Linearachssystems befindet. Das zu vermessende Objektiv wird nun mit einem montierten, elektronisch auslesbaren Kamerasystem mit einem Matrix-Sensor sinnvollerweise so auf dem Linearachs-/Neigesystems montiert, das die optische Achse senkrecht auf den Neigeachsen des Neigesystems steht, wobei das Kamerasystem als Messsensor für die Bestimmung des Abbildungsorts und der Strahldichte des Laserstrahls dient.

Der Messvorgang besteht nun darin, zu beliebigen Winkeln $\Theta_o$, $\Phi_o$ des Neigungssystems an beliebigen Orten $x_e$, $y_e$ des Linearachssystems die Abbildorte $x_i, y_i$ und die Strahldichte des Laserstrahls auf der Kamerasystems mit Matrix-Sensor durch Auslesen der Kamerabilder zu ermitteln.

Dies kann in Ausführungsformen beispielsweise durch einen Scan über einen Satz definierter Orte und Winkel erfolgen, woraus sich ein Datensatz ergibt, der einer Funktion $g_r(x_i, y_i, \Theta_o, \Phi_o, x_e, y_e)$ mit sechs Parametern entspricht, die mindestens die Abbildungseigenschaften "Verzeichnung" und "Vignettierung" zu einer festen Blendenzahl $f$ beschreibt.

Sollen unterschiedliche Blendenzahlen $f$ berücksichtigt werden, muss die Messung für die zu berücksichtigenden Blendenzahlen $f$ durchgeführt werden, woraus sich eine Funktion $g_r(x_i, y_i, \Theta_o, \Phi_o, x_e, y_e, f)$ mit sieben Parametern ergibt.

Bezüglich der Raytracing-Verfahren kann mittels dieser Funktion festgestellt werden, welche Lichtintensitäten beliebig gewählter Lichtstrahlen im Objektraum vom Bildpunkt an der Stelle $x_i, y_i$ gesehen werden. Durch die Berücksichtigung mehrerer solcher Strahlen wird intrinsisch der Effekt der Tiefenschärfe mit berücksichtigt.

Analog zu der Modellierung der Abstrahlcharakteristika von mehr oder weniger ausgedehnten Lampen bzw. Leuchten bzw. des Reflexions- bzw. Transmissionsverhaltens von Materialien können in Ausführungsformen also die Abbildungseigenschaften "Verzeichnung" und "Vignettierung" durch trainierbare Systeme, speziell künstliche neuronale Netze, bestimmt werden.

Dabei können in Ausführungsformen die Parameter $x_i, y_i$, $\Theta_o$ und $\Phi_o$ bzw. $x_i, y_i$, $\Theta_o$, $\Phi_o$ und $f$ die Netz-Eingangsdaten sein und $g_r, x_e, y_e$ die gewünschte Netzausgabe sein.

In manchen Ausführungsformen können also die Parameter $x_i, y_i$, $\Theta_o$ und $\Phi_o$ Eingangsparameter eines neuronalen Netzes sein, und $g_r$, $x_e$, $y_e$ können eine Netzausgabe des neuronalen Netzes sein.

In anderen Ausführungsformen können also die Parameter $x_i, y_i$, $\Theta_o$, $\Phi_o$ und $f$ Eingangsparameter eines neuronalen Netzes sein, und $g_r, x_e, y_e$ können eine Netzausgabe des neuronalen Netzes sein. $f$ ist dabei die Frequenz des Lichts.

Eine äquivalente Messanordnung gemäß einer Ausführungsform besteht darin, den Laserstrahl kameraseitig durch das zu vermessende Objektiv auf einen Schirm abzubilden und dessen Lage mittels einem kalibrierten Kamerasystem zu ermitteln.

Die oben beschriebene Modellierung der Abstrahlcharakteristika von real existierenden, mehr oder weniger ausgedehnten Lampen bzw. Leuchten, die Modellierung des Reflexions- bzw. Transmissionsverhaltens von realen Materialien (BRDF bzw. BTDF) und die Modellierung der Abbildungseigenschaften "Verzeichnung" und "Vignettierung" von real existierenden Objektiven mittels trainierbaren Systemen, speziell künstlichen neuronalen Netzen hat eine Reihe von Vorteilen: Die Modelle können aus Datensätzen mehrerer typgleichen Lampen bzw. Leuchten bzw. typgleichen Materials erstellt werden, was zu einer Berücksichtigung aller Daten führt. Ferner liefern die Netze auf Grund ihrer Fähigkeit der Interpolation und Verallgemeinerung auch verlässliche Ausgangswerte für nicht trainierte Eingangsvariablen. Des Weiteren erfolgt die Ermittlung der Ausgangswerte zu gegebenen Eingangsvariablen effizient.

Die optischen und die qualitativen Abbildungseigenschaften "sphärische und chromatische Aberration", "Auflösungsvermögen" von Objektiven, die "Belichtungszeit" sowie die Eigenschaften der bildgebenden Sensoren von Kamerasystemen (VDMA 1288) lassen sich mittels Operatoren aus der Bildverarbeitung sensorrealistisch berücksichtigen.

Nachfolgend werden weitere Ausführungsformen beschrieben, die verbesserte Konzepte für Raytracing bereitstellen.

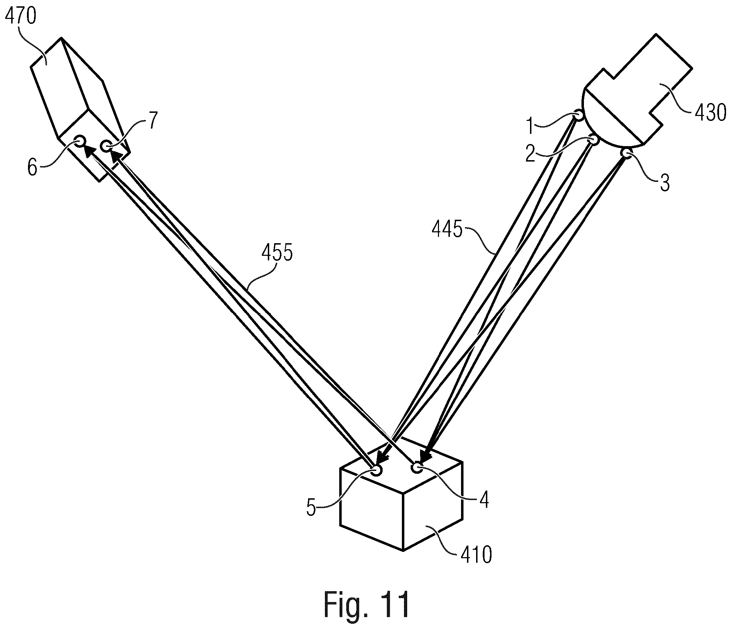

Fig. 11 zeigt eine Anordnung gemäß einer Ausführungsform, die ein Beleuchtungssystem 430, ein Objekt 410 und ein Kamerasystem 470 aufweist.

Gemäß weiterer Ausführungsformen oder gemäß erweiterter Ausführungsformen besitzt eine mehr oder weniger ausgedehnten Lampe bzw. Leuchte 430 an verschiedenen Punkten ihrer Oberfläche unterschiedliche (Licht-)Strahldichten in unterschiedliche Raumrichtungen. Für das Folgende werden drei solcher Punkte, nummeriert mit 1, 2, 3, auf der Lampen bzw. Leuchten 430 betrachtet.

Von jedem der drei Punkte 1, 2, 3 der Lampe bzw. Leuchte 430 fallen Lichtstrahlen a) ins Leere, b) auf ein Objekt 410 der Szene oder c) in das Kamerasystem bzw. den Sensor 470. Für das Folgende werden zwei solcher Punkte, nummeriert mit 4, 5, auf dem Objekt 410 betrachtet.

Von jeder der zwei Punkte 4, 5 des Objekts 410 fallen wiederum Lichtstrahlen a) ins Leere, b) auf ein weiteres Objekt der Szene (Mehrfachreflexion) oder c) in das Kamerasystem bzw. den Sensor 470. Für das Folgende werden zwei Bildpunkte, nummeriert mit 6, 7, des Kamerasystems bzw. des Sensors 470 betrachtet.

Nun gehen von jedem Punkt 1, 2, 3 der Lampe bzw. Leuchte 430 Lichtstrahlen 445 zu den Stellen 4 und 5 auf dem Objekt 410, d.h. die Raumwinkel und (Licht-)Strahldichten (aus der *Abstrahlcharakteristik*) der Strahlen an den Stellen der Lampe bzw. Leuchte 430 und die Raumwinkel an den Stellen des Objekts 410 sind bekannt.

Des Weiteren fallen von jeder Stelle 4 und 5 des Objekts 410 Lichtstrahlen 455 auf die Bildpunkte 6 und 7 des Kamerasystems bzw. des Sensors 470, d.h. nun sind Raumwinkel und Strahldichte (aus der das *Reflexions- bzw. Transmissionsverhalten* beschreibenden BRDF bzw. BTDF) der reflektierten Strahlen 455 ebenfalls bekannt. Somit kann die von den beiden Bildpunkten 6, 7 wahrgenommene Lichtintensität wie folgt berechnet werden:

Die Strahldichte (aus der *Abstrahlcharakteristik*) der Lampe bzw. Leuchte 430 an den Stellen 1, 2 und 3 bezüglich der Raumwinkel der Lichtstrahlen 445 zwischen diesen Stellen und den Stellen 4 und 5 auf dem Objekt 410 wird dargestellt durch die drei Vektoren:

$$1: \begin{pmatrix} L_{1,4} \\ L_{1,5} \end{pmatrix} \qquad 2: \begin{pmatrix} L_{2,4} \\ L_{2,5} \end{pmatrix} \qquad 3: \begin{pmatrix} L_{3,4} \\ L_{3,5} \end{pmatrix}$$

Durch Multiplikation der von einem Punkt 4 und 5 des Objekts 410 gesehenen Strahldichten der Punkte der Lampe bzw. Leuchte 430 mit den konstruktionsbedingt konstanten Parametern der BRDF bzw. BTDF und Summation der Produkte (Superpositionsprinzip) errechnen sich die von den Bildpunkten 6 und 7 des Kamerasystems bzw. des Sensors 470 gesehenen Strahldichten wie folgt:

$$L_{4,6} = L_{1,4} \cdot f(\omega_{1,4}, \omega_{4,6}) + L_{2,4} \cdot f(\omega_{2,4}, \omega_{4,6}) + L_{3,4} \cdot f(\omega_{3,4}, \omega_{4,6})$$

$$L_{4,7} = L_{1,4} \cdot f(\omega_{1,4}, \omega_{4,7}) + L_{2,4} \cdot f(\omega_{2,4}, \omega_{4,7}) + L_{3,4} \cdot f(\omega_{3,4}, \omega_{4,7})$$

$$L_{5,6} = L_{1,5} \cdot f(\omega_{1,5}, \omega_{5,6}) + L_{2,5} \cdot f(\omega_{2,5}, \omega_{5,6}) + L_{3,5} \cdot f(\omega_{3,5}, \omega_{5,6})$$

$$L_{5,7} = L_{1,5} \cdot f(\omega_{1,5}, \omega_{5,7}) + L_{2,5} \cdot f(\omega_{2,5}, \omega_{5,7}) + L_{3,5} \cdot f(\omega_{3,5}, \omega_{5,7})$$

was den folgenden Matrix-Vektor Multiplikationen entspricht:

$$\begin{pmatrix} L_{4,6} \\ L_{4,7} \end{pmatrix} = \begin{pmatrix} f(\omega_{1,4}, \omega_{4,6}) & f(\omega_{2,4}, \omega_{4,6}) & f(\omega_{3,4}, \omega_{4,6}) \\ f(\omega_{1,4}, \omega_{4,7}) & f(\omega_{2,4}, \omega_{4,7}) & f(\omega_{3,4}, \omega_{4,7}) \end{pmatrix} \cdot \begin{pmatrix} L_{1,4} \\ L_{2,4} \\ L_{3,4} \end{pmatrix}$$

$$\begin{pmatrix} L_{5,6} \\ L_{5,7} \end{pmatrix} = \begin{pmatrix} f(\omega_{1,5}, \omega_{5,6}) & f(\omega_{2,5}, \omega_{5,6}) & f(\omega_{3,5}, \omega_{5,6}) \\ f(\omega_{1,5}, \omega_{5,7}) & f(\omega_{2,5}, \omega_{5,7}) & f(\omega_{3,5}, \omega_{5,7}) \end{pmatrix} \cdot \begin{pmatrix} L_{1,5} \\ L_{2,5} \\ L_{3,5} \end{pmatrix}$$

Der Ansatz kann auch verwendet werden, wenn Lichtstrahlen eines Quellpunkts Zielpunkte mehrerer Objekte der Szene erreichen. Sinnvollerweise werden daher für jeden betrachteten Punkt zwei Vektoren, ein Adressvektor, der den Speicherort der gesehenen Strahldichten angibt, ein Wertevektor, der die Strahldichten von nachfolgenden Punkten repräsentiert, und eine Matrix mit den konstanten Parametern der BRDF bzw. BTDF allokiert. Die Parameter als konstant anzunehmen, ist insoweit eine vereinfachende Betrachtungsweise, als diese von den Einfalls- und Ausgangswinkeln abhängig sind.

In Ausführungsformen kann die Berechnung beispielsweise nach folgendem Schema ablaufen:

1. Berechne unter Berücksichtigung der geometrischen Abbildungseigenschaften und der optischen Apertur den Schnittpunkt der in den Objektraum abgebildeten Pixel mit den nächstliegenden Objekten der Szene.

2. Belege die restlichen Oberflächen aller an einer Szene beteiligten Lichtquellen und Objekte mit Ortspunkten einer definierten Dichte.

3. Verbinde alle auf direktem Weg erreichbaren Punkte der Szene

4. Erstelle für jeden Punkt auf den Objekten der Szene die Matrizen der für die Kombination aus Quellpunkt und Zielpunkt konstanten Parameter der BRDF bzw. BTDF.

5. Initialisiere alle Werte der Strahldichtevektoren mit Null außer den Werten, die Strahldichten von Lampen bzw. Leuchten repräsentieren. Initialisiere diese Werte entsprechend den Abstrahlcharakteristiken.

6. Berechne iterativ die Strahldichtevektoren aller Punkte, deren gesehene Strahldichtevektoren sich mehr als ein vorgegebener Schwellwert (Abbruchkriterium) geändert haben.

Da die Matrizen der für die Kombination aus Quellpunkt und Zielpunkt konstanten Parameter der BRDF bzw. BTDF erheblichen Speicherplatz benötigen, wird vorgeschlagen, diese auf einen Massenspeicher auszulagern und nur bei Bedarf zu laden, was parallel zu aktuell laufenden Matrix-Vektor-Multiplikationen erfolgen kann.

Da in der Regel Multireflektionen auf Grund diffuser Streuung und Absorption sehr rasch zu marginalen Änderungen in den entsprechenden Strahldichten führen, kann die Iterationstiefe beispielsweise gering sein, und demzufolge ist der Zeitbedarf für die Berechnungen noch nicht allzu groß.

Darüber hinaus kann in Ausführungsformen bereits nach der Initialisierung geprüft werden, welche Lichtpfade zwischen Lichtquellen und Kamerasystem nur geringe oder keine Anteile an den von den einzelnen Bildpunkten gesehenen Strahldichten haben und können bereits vor der eigentlichen Berechnung eliminiert werden, woraus sich geringere Datenvolumina ergeben.

Alternativ oder zusätzlich kann die Dichteverteilung entsprechend der Wichtigkeit (englisch: importance) bestimmter Lichtpfade adaptiert werden. Alternativ kann auch zunächst mit einem klassischen Raytracing-Verfahren ein näherungsweise sensorrealistisches Bild generiert und die Lichtpfade mit hohen Lichtintensitäten aufgezeichnet werden, die dann die Initialwerte des oben beschriebenen sensorrealistischen Bildsimulationsverfahren darstellen.

Insgesamt wird davon ausgegangen, dass die resultierenden Bilder einer solchen Simulation auf Grund der Verwendung von messtechnisch ermittelten, anstelle von analytischen, stark vereinfachten Charakteristika (Abstrahlcharakteristiken und Reflexions- bzw. Transmissionsverhalten) deutlich sensorrealistischer sind.

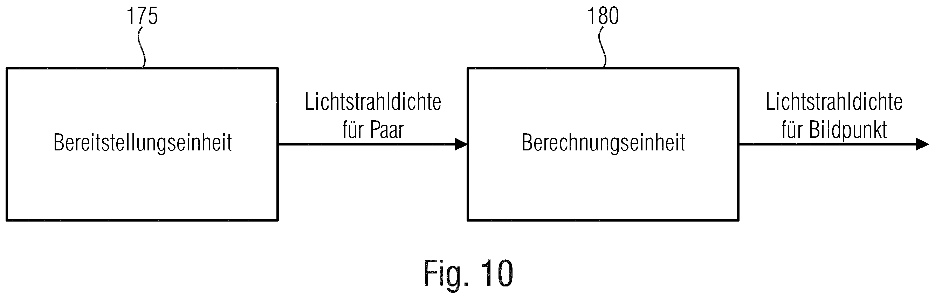

Fig. 10 zeigt eine Vorrichtung zur Berechnung einer Lichtstrahldichte für jeden Bildpunkt einer Gruppe von ein oder mehreren Bildpunkten eines Kamerasystems gemäß einer allgemeinen Ausführungsform.

Die Vorrichtung umfasst eine Bereitstellungseinheit 175 und eine Berechnungseinheit 180.

Die Bereitstellungseinheit 175 ist ausgebildet, zu jedem Leuchtenpunkt-Objektpunkt-Paar, welches aus einem Punkt auf einer Leuchte aus einer Gruppe von zwei oder mehr Punkten auf der Leuchte und aus einem Punkt auf einem Objekt aus einer Gruppe von zwei oder mehr Punkten auf dem Objekt besteht, eine Lichtstrahldichte für dieses Leuchtenpunkt-Objektpunkt-Paar bereitzustellen.

Ferner ist die Bereitstellungseinheit 175 ausgebildet, zu jedem Bildpunkt-Objektpunkt-Paar, welches aus einem Bildpunkt der Gruppe der ein oder mehreren Bildpunkte des Kamerasystems und aus einem Punkt auf dem Objekt aus der Gruppe der zwei oder mehr Punkte auf dem Objekt besteht, eine Lichtstrahldichte für dieses Bildpunkt-Objektpunkt-Paar bereitzustellen.

Die Berechnungseinheit 180 ist ausgebildet, die Lichtstrahldichte jedes Bildpunkts der Gruppe der ein oder mehreren Bildpunkte des Kamerasystems abhängig von den Lichtstrahldichten derjenigen Bildpunkt-Objektpunkt-Paare zu bestimmen, denen dieser Bildpunkt angehört, und abhängig von den Lichtstrahldichten der Leuchtenpunkt-Objektpunkt-Paare zu bestimmen, die von der Bereitstellungseinheit 175 bereitgestellt wurden.

Gemäß einer Ausführungsform kann die Berechnungseinheit 180 ausgebildet sein, die Lichtstrahldichte jedes Bildpunkts der Gruppe der ein oder mehreren Bildpunkte des Kamerasystems basierend auf ein oder mehreren Matrixmultiplikationen von zwei oder mehr Matrizen zu berechnen.

In einer Ausführungsform können die Matrixkoeffizienten der zwei oder mehr Matrizen der ein oder mehreren Matrixmultiplikationen die Lichtstrahldichten der Bildpunkt-Objektpunkt-Paare und die Lichtstrahldichten der Leuchtenpunkt-Objektpunkt-Paare sein oder von diesen abhängen.

Gemäß einer Ausführungsform kann die Berechnungseinheit 180 zur Berechnung der Lichtstrahldichte eines Bildpunktes aus der Gruppe der ein oder mehreren Bildpunkte des Kamerasystems ausgebildet sein, die Lichtstrahldichte jedes Bildpunkts der Gruppe der ein oder mehreren Bildpunkte des Kamerasystems so zu bestimmen, dass die Berechnungseinheit 180 für die Lichtstrahldichte jedes der Bildpunkt-Objektpunkt-Paare, die von der Bereitstellungseinheit 175 bereitgestellt wurden, prüft, ob die Lichtstrahldichte größer als ein Schwellwert ist, und die Lichtstrahldichte dieses Bildpunkts unter Verwendung derjenigen Lichtstrahldichten der Bildpunkt-Objektpunkt-Paare zu berechnen, die größer als der Schwellwert sind, und nicht unter Verwendung derjenigen Lichtstrahldichten der Bildpunkt-Objektpunkt-Paare zu berechnen, die nicht größer als der Schwellwert sind.

In einer Ausführungsform kann die Berechnungseinheit 180 zur Berechnung der Lichtstrahldichte eines Bildpunktes aus der Gruppe der ein oder mehreren Bildpunkte des Kamerasystems ausgebildet sein, die Lichtstrahldichte jedes Bildpunkts der Gruppe der ein oder mehreren Bildpunkte des Kamerasystems so zu bestimmen, dass die Berechnungseinheit 180 für die Lichtstrahldichte jedes der Bildpunkt-Objektpunkt-Paare, denen dieser Bildpunkt angehört, prüft, ob die Lichtstrahldichte größer als ein Schwellwert ist, und die Lichtstrahldichte dieses Bildpunkts unter Verwendung derjenigen Lichtstrahldichten der Bildpunkt-Objektpunkt-Paare zu berechnen, die größer als der Schwellwert sind, und nicht unter Verwendung derjenigen Lichtstrahldichten der Bildpunkt-Objektpunkt-Paare zu berechnen, die nicht größer als der Schwellwert sind.

Gemäß einer Ausführungsform kann die Bereitstellungseinheit 175 ausgebildet sein, die Lichtstrahldichten für die Leuchtenpunkt-Objektpunkt-Paare bereitzustellen und die Lichtstrahldichten für die Bildpunkt-Objektpunkt-Paare bereitzustellen, indem diese aus einer Datenbank geladen werden.

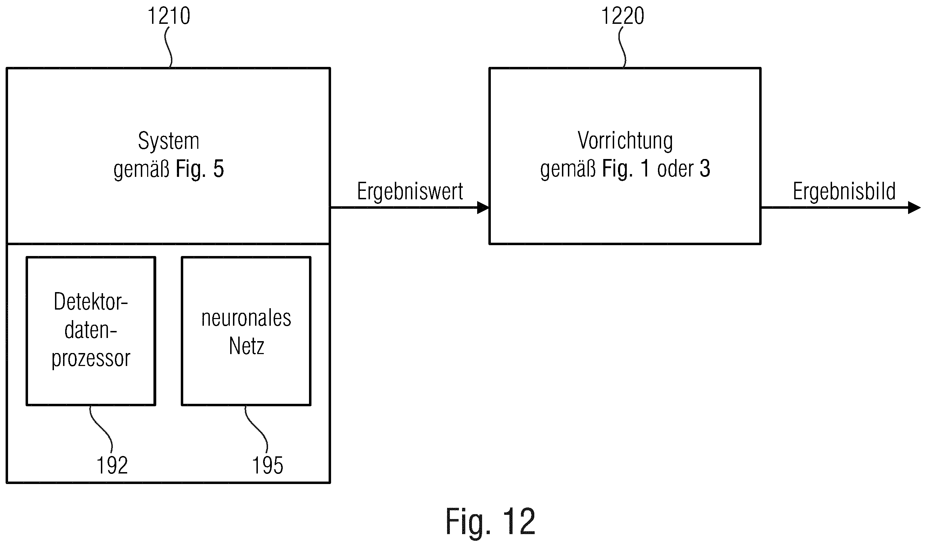

Fig. 12 zeigt ein System gemäß einer Gruppe von Ausführungsformen.

Das System umfasst eine Vorrichtung 1220 gemäß Fig. 1 oder Fig. 3 und ein System 1210 gemäß Fig. 5.

In einer ersten Ausführungsform ist der Detektordatenprozessor 192 des Systems 1210 eingerichtet, zu jedem Parametersatz einer Mehrzahl von Parametersätzen einen Ergebniswert als Ergebnis einer Bidirektionalen Reflektanzverteilungsfunktion abhängig von einem Lichtstrahldetektionswert des Parametersatzes zu berechnen.

In einer zweiten Ausführungsform ist der Detektordatenprozessor 192 des Systems 1210 eingerichtet, zu jedem Parametersatz einer Mehrzahl von Parametersätzen einen Ergebniswert als Ergebnis einer Bidirektionalen Transmissionsverteilungsfunktion abhängig von einem Lichtstrahldetektionswert des Parametersatzes zu berechnen.

Der Detektordatenprozessor 192 des Systems 1210 ist eingerichtet, das neuronale Netz 195 des Systems der Fig. 5 mittels der Mehrzahl von Parametersätzen und mittels des Ergebniswerts jedes Parametersatzes der Mehrzahl von Parametersätzen zu trainieren.

Der Datendetektorprozessor 192 des Systems 1210 ist ausgebildet, durch Verwendung des neuronalen Netzes 195 des Systems 1210 zu einem Parametersatz, der nicht von der Mehrzahl der Parametersätze umfasst ist, einen Ergebniswert für diesen Parametersatz zu erzeugen und auszugeben.

Die Vorrichtung 1220 ist ausgebildet, ein Ergebnisbild abhängig von dem Ergebniswert zu erzeugen.

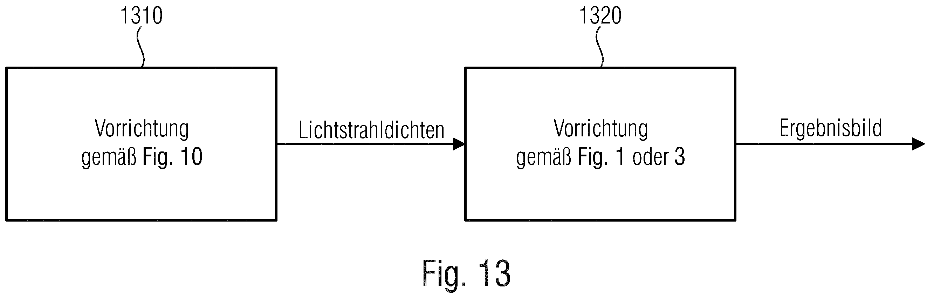

Fig. 13 zeigt ein System gemäß einer weiteren Ausführungsform.

Das System umfasst eine Vorrichtung 1320 gemäß Fig. 1 oder Fig. 3 und eine Vorrichtung 1310 gemäß Fig. 10.

Die Vorrichtung 1310 ist zur Berechnung einer Lichtstrahldichte für jeden Bildpunkt einer Gruppe von ein oder mehreren Bildpunkten eines Kamerasystems ausgebildet.

Die Vorrichtung 1320 ist ausgebildet, ein Ergebnisbild abhängig von der Gruppe von den oder mehreren Bildpunkten zu erzeugen.

Nachfolgend werden Aspekte von Ausführungsformen diskutiert, die die automatische Auswahl und Optimierung der Komponenten eines Bildverarbeitungssystems betreffen.

So stellen Ausführungsformen einen neuartigen Ansatz der virtuellen Bildverarbeitung auf Basis sensorrealistisch simulierter Bilder bereit, wodurch eine systematische Vorgehensweise für die Erstellung von Bildverarbeitungssystemen geschaffen wird, welche deren Qualität und Effizienz erheblich steigert. Durch diese Vorgehensweise wird der Anwender in die Lage versetzt, die bisherigen Grenzen für den Einsatz von Bildverarbeitungssystemen zu überwinden, die durch den Aufwand bei der Konzeptionierung und Parametrierung der Bildaufnahme und der Bildverarbeitung gesetzt sind.

In manchen Ausführungsformen wird die Bildaufnahme und auf dieser Grundlage das Bildverarbeitungssystemen mit allen zu berücksichtigenden Komponenten und deren Parametrierungen erstellt. Um einer optimalen Konfiguration näher zu kommen, werden Prüfkonfigurationen und Prüfabläufe simuliert. Dies kann beispielsweise die Simulation der Komponenten Beleuchtungssystem, Kamerasystem und Prüfobjekt/Prüfszene sowie deren Anordnung zueinander und alle Komponenten der Bildverarbeitung umfassen, die zur Erzielung des Ergebnisses sinnvoll sind.

Zur Optimierung der Bildverarbeitungskomponenten und zur Auswahl von Bildverarbeitungsverfahren bzw. Bildverarbeitungsalgorithmen werden in manchen Ausführungsformen Einflussfaktoren variiert und in Bezug auf unterschiedliche Kriterien bewertet (z.B. bzgl. Leistung, Preis, Geschwindigkeit, Baugröße, Inspektionsansatz, Präzision, Erreichbarkeit, Sichtbarkeit).

Dazu werden in besonderen Ausführungsformen außerdem erweiterte synthetische Musterkataloge verwendet werden, die eine Ergänzung realer Musterkataloge, eine erweiterte Variation der Szene und die Simulation von Defekten erlauben. Somit stehen für die Auslegung von Bildverarbeitungssystemen Bilddaten zur Verfügung, die in dieser Vielfalt in Realität nicht erzeugt werden können und somit eine verbesserte Bewertung der Qualität des Bildverarbeitungssystems ermöglichen.

Die so erzeugten Bilder können genutzt werden, um unterschiedliche Komponenten (d.h. Kamera, Optik, Beleuchtungssystem mit Beleuchtungsoptik), Konstellationen und Bildverarbeitungsverfahren bzw. Bildverarbeitungsalgorithmen zu testen und zu evaluieren, bevor ein realer Aufbau erstellt ist bzw. bevor die Produktion eines zu prüfenden Produkts anläuft.

Mit den bereitgestellten Ausführungsformen wird eine höhere Effizienz (in Bezug auf Zeit und Kosten) bei der Erstellung und Konfiguration von Bildverarbeitungssystemen erzielt. Durch die bessere Auslegung und gezieltere Optimierung von Bildverarbeitungssystemen werden leistungsfähigere und günstigere Inspektionslösungen erreicht, was zu einer höheren Kundenzufriedenheit führt.

Hierdurch lassen sich auch solche Anwendungen von Bildverarbeitungssystemen erschließen, die nach üblichen Vorgehensweisen nicht wirtschaftlich angegangen werden können.

Ein technisches Anwendungsgebiet von Ausführungsformen sind Systeme zur industriellen Bildverarbeitung und Sichtprüfung. Solche Systeme werden in vielfältiger Ausführung in allen Branchen der industriellen Produktion verwendet.

Ausführungsformen sind darüber hinaus in zahlreichen weiteren Gebiete anwendbar, beispielsweise auf dem Gebiet der Entwicklung und dem Test von Medikamentenwirkstoffen, aus dem Gebiet des zellbasierten Nachweises von Biomarkern, auf dem Gebiet des ästhetischen Zahnersatzes, bei der Gesichts- und Objekterkennung, als Abstraktionslayer für (günstige) Kamerasysteme, z.B. in Mobilgeräten, auf dem Gebiet der Fahrerassistenzsysteme, im Bereich des Ambient Assisted Living (AAL), in der Messtechnik, auf dem Gebiet der Objekt- und Objektlageerkennung für die Automation, bei der Mensch-Maschine-Kooperation, und auf dem Gebiet der Simulation individualisiert gefertigter Produkte (Rapid Manufacturing, Generative Fertigung).

Manche Ausführungsformen stellen also eine automatische Auswahl der Komponenten eines Bildverarbeitungssystems und eine automatische Optimierung der Parametrierung mittels synthetischer Erzeugung von Bildern mittels CAD, Modellierung der Szene, des Objekts, des Beleuchtungssystems, des Kamerasystems und des Renderings bereit.

In bevorzugten Ausführungsformen werden alle Eigenschaften bei der Bildsynthese berücksichtigt, die relevant für die Lösung der Bildverarbeitungsaufgabe sind. Es wird Sensorrealismus bezüglich der Modellierung erzielt.

Bei manchen bevorzugten Ausführungsformen findet das Rendering mit derjenigen Genauigkeit statt, die für das Bildverarbeitungssystem benötigt wird. Es wird Sensorrealismus bezüglich des Renderings erzielt.

In manchen bevorzugten Ausführungsformen werden mit den synthetischen Bildern Parameterbereiche abgedeckt, für die es keine realen Bilder gibt (z.B. weil das Objekt noch nicht produziert wird, es keine Schlechtteile gibt). Hierdurch wird eine Erweiterung des Parameterbereichs erzielt.

Bei manchen bevorzugten Ausführungsformen kommen bei der Optimierung der Parameter des Bildverarbeitungssystems Verfahren des Machine Learning (u.a. des Deep Learning) zum Einsatz.

In manchen bevorzugten Ausführungsformen kommen bei der Optimierung der Parameter des Bildverarbeitungssystems evolutionäre Algorithmen zum Einsatz.

Bei den obigen Ausführungen ist der Begriff des Bildverarbeitungssystems nicht starr zu verstehen, sondern kann je nach Aufgabenstellung und Anwendung unterschiedliche Komponenten umfassen. So kann es z.B. je nach Aufgabenstellung der Anwendung notwendig oder sinnvoll sein, ein Beleuchtungssystem oder ein Handhabungssystem in das Bildverarbeitungssystem zu integrieren. In anderen Ausführungsbeispielen kann dies beispielsweise nicht erforderlich sein.

Bei den Ausführungen ist auch der Begriff des Kamerasystems nicht starr zu verstehen, sondern kann je nach Aufgabenstellung und Anwendung unterschiedliche Komponenten umfassen. Als Kamerasystem kann eine Kombination aus System aus Kamera und Abbildungsoptik verwendet werden, bei manchen Ausführungsbeispielen kann beispielsweise auf die Abbildungsoptik verzichtet werden. Eine Kamera kann ein Gerät umfassen, das aus einem Bildsensor und einer elektronischen Schaltung zur Ansteuerung des Bildsensors und zur Aufbereitung der Bildinformation für deren Übertragung an eine Bildverarbeitungseinheit besteht. Eine mechanische Einhausung von Bildsensor und elektronischer Schaltung kann für deren Schutz und die wohldefinierte geometrische Lage des Bildsensors bezüglich einer mechanischen Schnittstelle zur Abbildungsoptik sorgen. Bei manchen Ausführungsbeispielen können manche dieser Komponenten nicht erforderlich sein.

Ebenso ist bei den Ausführungen der Begriff des Beleuchtungssystems nicht starr zu verstehen, sondern kann je nach Aufgabenstellung und Anwendung unterschiedliche Komponenten umfassen. So kann es eine Lampe umfassen, das in eine Leuchte eingebaut ist. Zusätzlich kann eine Beleuchtungsoptik vorhanden sein, welche die Abstrahlcharakteristik des Beleuchtungssystems bestimmt. Bei manchen Ausführungsbeispielen können manche dieser Komponenten nicht erforderlich sein.

Ein Beleuchtungssystem kann also z.B. (insbesondere) ein oder mehrere Lichtquellen umfassen.

Was die zu untersuchenden ein oder mehreren Objekte betrifft, werden in manchen Ausführungsformen unter anderem die Reflektanz und/oder spektrale Eigenschaften einer Oberfläche und/oder Toleranzen und/oder eine tatsächliche geometrische Abweichungen von der Soll-Gestalt und/oder Rauheit und/oder Vorzugsrichtungen und Spektrum einer Textur und/oder Herstellungsparameter und/oder Dynamik (Bewegung) berücksichtigt.

Was die Szene betrifft, werden in manchen Ausführungsformen unter anderem die geometrische Anordnung von Objekten und/oder eines Beleuchtungssystems und/oder eines Kamerasystems und/oder ein Umgebungslicht und/oder Vibrationen berücksichtigt.

Was das Beleuchtungssystem betrifft, werden in manchen Ausführungsformen unter anderem eine Anzahl und/oder eine Anordnung von Lichtquellen und/oder eine geometrische Gestalt und/oder eine Betriebsart (z.B. geblitzt, kontinuierlich, gepulst) und/oder ein Abstrahlungsverhalten (z.B. diffus, gerichtet, telezentrisch, in Ray-Files spezifiziert) und/oder spektrale Eigenschaften berücksichtigt.

Was die den Sensor des Kamerasystems betrifft, werden in manchen Ausführungsformen unter anderem der Typ und/oder die Größe und/oder eine Auflösung und/oder Empfindlichkeit und/oder Dynamik und/oder Rauschverhalten und/oder Fehlstellen und/oder Shutter und/oder Verschmutzungen des Sensorchips und/oder Kameraeigenschaften gemäß EMVA 1288 berücksichtigt.

Was die Abbildungsoptik des Kamerasystems betrifft, werden in manchen Ausführungsformen unter anderem die Brennweite und/oder die Lichtstärke und/oder die Apertur und/oder Verzeichnungen und/oder ein Auflösungsvermögen der Abbildungsoptik berücksichtigt.

Die Auswahl der Komponenten eines Bildverarbeitungssystems und die automatische Optimierung der Parametrierung kann sich in manchen Ausführungsformen auf alle Komponenten des Bildverarbeitungssystems inklusive der mechanischen, optischen und informationstechnischen Komponenten beziehen (beispielsweise Beleuchtungssysteme und Leuchten, Beleuchtungsoptiken, Halterungen, Kamerasysteme mit Sensoren und Abbildungsoptiken, Algorithmen zur Bildverarbeitung, zur Bildverarbeitungsanalyse und Parameterschätzung und Klassifikation). Bei der Auswahl und Optimierung können in manchen Ausführungsformen für manche oder für alle Parameter auch Randbedingungen berücksichtigt werden, die sich z.B. aus mechanischen, optischen, thermischen, sonstigen physikalischen, verfahrenstechnischen, informationstechnischen oder logischen Einschränkungen ergeben.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, der bzw. das dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. System zur Erzeugung eines Ergebnisbildes, wobei das System zur Erzeugung des Ergebnisbildes umfasst:

   ein System zur Ermittlung eines physikalischen Verhaltens eines Messobjekts (210) oder eines Beleuchtungssystems (230) oder einer Leuchte (310), und
   eine Vorrichtung (1220) zur Erzeugung des Ergebnisbildes, wobei die Vorrichtung (1220) eingerichtet ist, das Ergebnisbild so zu erzeugen, dass eine Aufnahme einer Szene durch ein Kamerasystem simuliert wird, wobei die Vorrichtung (1220) eingerichtet ist, ein Vorhandensein des Beleuchtungssystems, das ein oder mehrere Lichtquellen umfasst, die die Szene beleuchten, zu simulieren, und wobei die Vorrichtung (1220) eingerichtet ist, zu simulieren, dass sich in der Szene ein oder mehrere Objekte befinden,
   wobei die Vorrichtung (1220) eine Kamerasystemparameter-Einstelleinheit (110), eine Beleuchtungssystemparameter-Einstelleinheit (120), eine Objektparameter-Einstelleinheit (130) und eine Bilderzeugungseinheit (140) umfasst,
   wobei die Kamerasystemparameter-Einstelleinheit (110) ausgebildet ist, die zur Einstellung ein oder mehrerer Kamerasystemparameter ausgebildet ist, wobei jeder der ein oder mehreren Kamerasystemparameter eine Eigenschaft des Kamerasystems definiert,

wobei die Beleuchtungssystemparameter-Einstelleinheit (120) ausgebildet ist, die zur Einstellung ein oder mehrerer Beleuchtungssystemparameter ausgebildet ist, wobei jeder der ein oder mehreren Beleuchtungssystemparameter eine Eigenschaft des Beleuchtungssystems definiert,
wobei die Objektparameter-Einstelleinheit (130) für jedes Objekt der ein oder mehreren Objekte zur Einstellung ein oder mehrerer Objektparameter dieses Objekts ausgebildet ist, wobei jeder der ein oder mehreren Objektparameter dieses Objekts eine Eigenschaft dieses Objekts definiert, und
wobei

die Bilderzeugungseinheit (140) ist ausgebildet, das Ergebnisbild abhängig von den ein oder mehreren Kamerasystemparametern und abhängig von den ein oder mehreren Beleuchtungssystemparametern und abhängig von den ein oder mehreren Objektparametern der ein oder mehreren Objekte zu erzeugen; und wobei die Vorrichtung der Vorrichtung (1220), zusätzlich zu den ein oder mehreren Kamerasystemparametern und zusätzlich zu den ein oder mehreren Beleuchtungssystemparametern und zusätzlich zu den ein oder mehreren Objektparametern der ein oder mehreren Objekte, zur Einstellung von ein oder mehreren Zusatzparametern ausgebildet ist; und wobei die Bilderzeugungseinheit (140) ausgebildet ist, das Ergebnisbild zusätzlich abhängig von den ein oder mehreren Zusatzparametern zu erzeugen, wobei wenigstens einer der ein oder mehreren Zusatzparameter von einem Störungseffekt oder von einem Effekt bedingt durch eine nichtideale Eigenschaft des Kamerasystems oder des Beleuchtungssystems abhängt; oder
die Bilderzeugungseinheit (140) ist ausgebildet, ein oder mehrere erste Bilder abhängig von den ein oder mehreren Kamerasystemparametern und abhängig von den ein oder mehreren Beleuchtungssystemparametern und abhängig von den ein oder mehreren Objektparametern der ein oder mehreren Objekte zu erzeugen, wobei die Bilderzeugungseinheit (140) ausgebildet ist, das Ergebnisbild unter Verwendung der ein oder mehreren ersten Bilder zu erzeugen;

wobei das System zur Ermittlung des physikalischen Verhaltens einen Detektor (170; 270; 370), eine Steuervorrichtung (191; 291; 391), einen Detektordatenprozessor (192; 292; 392) und ein neuronales Netz (195; 995) umfasst,
wobei die Steuervorrichtung (191; 291; 391) eingerichtet ist, nacheinander eine Mehrzahl von Parametersätzen einzustellen, wobei jeder Parametersatz der Mehrzahl von Parametersätzen jedem Parameter einer Gruppe von zwei oder mehr Parametern einen Parameterwert zuweist, wobei sich jedes Paar von zwei Parametersätzen der Mehrzahl von Parametersätzen in zumindest einem Parameterwert eines Parameters der Gruppe von Parametern unterscheidet; und wobei die Steuervorrichtung (191; 291; 391) eingerichtet ist, für jeden Parametersatz der Mehrzahl von Parametersätzen, durch Einstellen des Parametersatzes zumindest den Detektor (170; 270; 370) oder das Beleuchtungssystem (230) oder die Leuchte (310) einzustellen;
wobei der Detektor (170; 270; 370) ausgebildet ist, zu jedem von der Steuervorrichtung (191; 291; 391) eingestellten Parametersatz der Mehrzahl der Parametersätze, einen Lichtstrahl zu detektieren und einen Lichtstrahldetektionswert, der von dem Lichtstrahl abhängt, an den Detektordatenprozessor (192; 292; 392) auszugeben, wobei der Lichtstrahl von dem Beleuchtungssystem (230) oder von der Leuchte (310) abhängt; und wobei der Detektordatenprozessor (192; 292; 392) eingerichtet ist, jeden Parametersatz der Mehrzahl von Parametersätzen zu empfangen, der von der Steuervorrichtung (191; 291; 391) eingestellt wird; und wobei der Detektordatenprozessor (192; 292; 392) eingerichtet ist, für jeden Parametersatz der Mehrzahl von Parametersätzen, von dem Detektor (170; 270; 370) den Lichtstrahldetektionswert zu diesem Parametersatz zu erhalten;
wobei der Detektordatenprozessor (192; 292; 392) eingerichtet ist, jedem Parametersatz der Mehrzahl von Parametersätzen einen Ergebniswert zuzuordnen, der der Lichtstrahldetektionswert dieses Parametersatzes ist oder der von dem Lichtstrahldetektionswert dieses Parametersatzes abhängt; wobei der Detektordatenprozessor (192; 292; 392) eingerichtet ist, zu jedem Parametersatz der Mehrzahl von Parametersätzen den Ergebniswert als Ergebnis einer Bidirektionalen Reflektanzverteilungsfunktion abhängig von dem Lichtstrahldetektionswert des Parametersatzes zu berechnen;
wobei der Detektordatenprozessor (192; 292; 392) eingerichtet ist, das neuronale Netz (195; 995) mittels der Mehrzahl von Parametersätzen und mittels des Ergebniswerts jedes Parametersatzes der Mehrzahl von Parametersätzen zu trainieren; wobei der Datendetektorprozessor (192; 292; 392) ausgebildet ist, durch Verwendung des neuronalen Netzes (195; 995) zu einem Parametersatz, der nicht von der Mehrzahl der Parametersätze umfasst ist, den Ergebniswert für diesen Parametersatz zu erzeugen und auszugeben;
wobei die Vorrichtung (1220) ausgebildet ist, das Ergebnisbild abhängig von dem Ergebniswert zu erzeugen.

2. System nach Anspruch 1,
wobei die Steuervorrichtung (191; 291; 391) eingerichtet ist, für jeden Parametersatz der Mehrzahl von Parametersätzen, durch Einstellen des Parametersatzes zumindest den Detektor (170; 270; 370) oder das Beleuchtungssystem (230) oder die Leuchte (310) einzustellen, indem die Steuervorrichtung (191; 291; 391) wenigstens einen ersten Azimuth-Winkel oder wenigstens einen ersten Zenith-Winkel des Detektors (170; 270; 370) einstellt, oder indem die Steuervorrichtung (191; 291; 391) wenigstens einen zweiten Azimuth-Winkel oder wenigstens einen zweiten Zenith-Winkel des Beleuchtungssystems (230) oder der Leuchte (310) einstellt.

3. System nach Anspruch 2,
wobei die Steuervorrichtung (191; 291; 391) eingerichtet ist, für jeden Parametersatz der Mehrzahl von Parametersätzen, den ersten Azimuth-Winkel und den ersten Zenith-Winkel des Detektors (170; 270; 370) einzustellen.

4. System nach Anspruch 3,
wobei die Steuervorrichtung (191; 291; 391) eingerichtet ist, für jeden Parametersatz der Mehrzahl von Parametersätzen, den zweiten Azimuth-Winkel und den zweiten Zenith-Winkel des Beleuchtungssystems (230) einzustellen.

5. System nach einem der vorherigen Ansprüche,

wobei das System ferner eine Haltevorrichtung (220; 221) aufweist, auf der das Messobjekt (210) anbringbar ist, und wobei das System ferner das Beleuchtungssystem (230) umfasst,
wobei der von dem Detektor (170; 270; 370) zu jedem von der Steuervorrichtung (191; 291; 391) eingestellten Parametersatz der Mehrzahl der Parametersätze detektierte Lichtstrahl ein Lichtstrahl ist, der durch Reflektion eines von dem Beleuchtungssystem (230) ausgesendeten Lichtstrahls an dem Messobjekt (210) entsteht, das auf der Haltevorrichtung (220; 221) angebracht ist.

6. System nach einem der Ansprüche 1 bis 4,

wobei das System ferner eine Haltevorrichtung (220; 221) aufweist, auf der das Messobjekt (210) anbringbar ist, und wobei das System ferner das Beleuchtungssystem (230) umfasst,
wobei der von dem Detektor (170; 270; 370) zu jedem von der Steuervorrichtung (191; 291; 391) eingestellten Parametersatz der Mehrzahl der Parametersätze detektierte Lichtstrahl ein Lichtstrahl ist, der dadurch entsteht, dass ein von dem Beleuchtungssystem (230) ausgesendeter Lichtstrahls das Messobjekt (210) transmittiert, das auf der Haltevorrichtung (220; 221) angebracht ist.

7. System nach einem der vorherigen Ansprüche,
wobei der Detektor (170; 270; 370) ausgebildet ist, zu jedem von der Steuervorrichtung (191; 291; 391) eingestellten Parametersatz der Mehrzahl der Parametersätze, einen Lichtstrahl zu detektieren, der von der Leuchte (310) ausgestrahlt wird.

8. System nach einem der vorherigen Ansprüche,
wobei die Steuervorrichtung (191; 291; 391) eingerichtet ist, für jeden Parametersatz der Mehrzahl von Parametersätzen, die Position auf der Leuchte (310) einzustellen, so dass von der Position auf der Leuchte (310) der Lichtstrahl ausgeht, der von dem Detektor (170; 270; 370) detektiert wird.

9. System nach Anspruch 8,
wobei die Steuervorrichtung (191; 291; 391) eingerichtet ist, für jeden Parametersatz der Mehrzahl von Parametersätzen, die Position auf der Leuchte (310) einzustellen, indem zumindest eine x-Koordinatenposition und eine y-Koordinatenposition dieser Position eingestellt werden.

10. System nach einem der vorherigen Ansprüche,
wobei der Detektordatenprozessor (192; 292; 392) eingerichtet ist, zu jedem Parametersatz der Mehrzahl von Parametersätzen den Ergebniswert als Ergebnis der Bidirektionalen Transmissionsverteilungsfunktion abhängig von dem Lichtstrahldetektionswert des Parametersatzes zu berechnen.

11. System nach einem der vorherigen Ansprüche,

wobei die Steuervorrichtung (191; 291; 391) eingerichtet ist, für jeden Parametersatz der Mehrzahl von Parametersätzen, eine Position in einem Linearachssystem einzustellen, und
wobei der Detektor (170; 270; 370) ein Kamerasystem mit einem Matrix-Sensor ist.

12. System nach Anspruch 11,

wobei die Steuervorrichtung (191; 291; 391) eingerichtet ist, für jeden Parametersatz der Mehrzahl von Parametersätzen, eine Blendenzahl einzustellen.

13. System nach einem der vorherigen Ansprüche,
wobei die Steuervorrichtung (191; 291; 391) eingerichtet ist, für jeden Parametersatz der Mehrzahl von Parametersätzen, einen Wellenlänge-Wert einzustellen, wobei eine Wellenlänge des Lichtstrahls, der von dem Detektor (170; 270; 370) detektiert wird, von dem Wellenlänge-Wert abhängt.

14. Verfahren zur Erzeugung eines Ergebnisbildes,

wobei das Verfahren umfasst, dass eine Vorrichtung (1220) zur Erzeugung des Ergebnisbildes das Ergebnisbild so erzeugt, dass eine Aufnahme einer Szene durch ein Kamerasystem simuliert wird, wobei die Vorrichtung (1220) ein Vorhandensein des Beleuchtungssystems, das ein oder mehrere Lichtquellen umfasst, die die Szene beleuchten, simuliert, und wobei die Vorrichtung (1220) simuliert, dass sich in der Szene ein oder mehrere Objekte befinden,
wobei eine Kamerasystemparameter-Einstelleinheit (110) der Vorrichtung (1220) ein oder mehrere Kamerasystemparameter einstellt, wobei jeder der ein oder mehreren Kamerasystemparameter eine Eigenschaft des Kamerasystems definiert,
wobei eine Beleuchtungssystemparameter-Einstelleinheit (120) der Vorrichtung (1220) ein oder mehrere Beleuchtungssystemparameter einstellt, wobei jeder der ein oder mehreren Beleuchtungssystemparameter eine Eigenschaft des Beleuchtungssystems definiert,
wobei die Objektparameter-Einstelleinheit (130) der Vorrichtung (1220) für jedes Objekt der ein oder mehreren Objekte ein oder mehrerer Objektparameter dieses Objekts einstellt, wobei jeder der ein oder mehreren Objektparameter dieses Objekts eine Eigenschaft dieses Objekts definiert, und
wobei

eine Bilderzeugungseinheit (140) der Vorrichtung (1220) das Ergebnisbild abhängig von den ein oder mehreren Kamerasystemparametern und abhängig von den ein oder mehreren Beleuchtungssystemparametern und abhängig von den ein oder mehreren Objektparametern der ein oder mehreren Objekte erzeugt; und wobei die Vorrichtung (1220), zusätzlich zu den ein oder mehreren Kamerasystemparametern und zusätzlich zu den ein oder mehreren Beleuchtungssystemparametern und zusätzlich zu den ein oder mehreren Objektparametern der ein oder mehreren Objekte, ein oder mehreren Zusatzparametern einstellt; und wobei die Bilderzeugungseinheit (140) das Ergebnisbild zusätzlich abhängig von den ein oder mehreren Zusatzparametern erzeugt, wobei wenigstens einer der ein oder mehreren Zusatzparameter von einem Störungseffekt oder von einem Effekt bedingt durch eine nichtideale Eigenschaft des Kamerasystems oder des Beleuchtungssystems abhängt; oder
die Bilderzeugungseinheit (140) erzeugt ein oder mehrere erste Bilder abhängig von den ein oder mehreren Kamerasystemparametern und abhängig von den ein oder mehreren Beleuchtungssystemparametern und abhängig von den ein oder mehreren Objektparametern der ein oder mehreren Objekte, wobei die Bilderzeugungseinheit (140) das Ergebnisbild unter Verwendung der ein oder mehreren ersten Bilder erzeugt;

wobei das Verfahren weiter umfasst, dass eine Steuervorrichtung (191; 291; 391) eines Systems zur Ermittlung des physikalischen Verhaltens nacheinander eine Mehrzahl von Parametersätzen einstellt, wobei jeder Parametersatz der Mehrzahl von Parametersätzen jedem Parameter einer Gruppe von zwei oder mehr Parametern einen Parameterwert zuweist, wobei sich jedes Paar von zwei Parametersätzen der Mehrzahl von Parametersätzen in zumindest einem Parameterwert eines Parameters der Gruppe von Parametern unterscheidet; und wobei die Steuervorrichtung (191; 291; 391) für jeden Parametersatz der Mehrzahl von Parametersätzen, durch Einstellen des Parametersatzes zumindest den Detektor (170; 270; 370) oder das Beleuchtungssystem (230) oder die Leuchte (310) einstellt;
wobei ein Detektor (170; 270; 370) des Systems zur Ermittlung des physikalischen Verhaltens zu jedem von der Steuervorrichtung (191; 291; 391) eingestellten Parametersatz der Mehrzahl der Parametersätze, einen Lichtstrahl detektiert und einen Lichtstrahldetektionswert, der von dem Lichtstrahl abhängt, an einen Detektordatenprozessor (192; 292; 392) des Systems zur Ermittlung des physikalischen Verhaltens ausgibt, wobei der Lichtstrahl von dem Beleuchtungssystem (230) oder von der Leuchte (310) abhängt; und
wobei der Detektordatenprozessor (192; 292; 392) jeden Parametersatz der Mehrzahl von Parametersätzen empfängt, der von der Steuervorrichtung (191; 291; 391) eingestellt wird; und wobei der Detektordatenprozessor (192; 292; 392) für jeden Parametersatz der Mehrzahl von Parametersätzen, von dem Detektor (170; 270; 370) den Lichtstrahldetektionswert zu diesem Parametersatz erhält;

wobei der Detektordatenprozessor (192; 292; 392) jedem Parametersatz der Mehrzahl von Parametersätzen einen Ergebniswert zuordnet, der der Lichtstrahldetektionswert dieses Parametersatzes ist oder der von dem Lichtstrahldetektionswert dieses Parametersatzes abhängt; wobei der Detektordatenprozessor (192; 292; 392) zu jedem Parametersatz der Mehrzahl von Parametersätzen den Ergebniswert als Ergebnis einer Bidirektionalen Reflektanzverteilungsfunktion abhängig von dem Lichtstrahldetektionswert des Parametersatzes berechnet; wobei der Detektordatenprozessor (192; 292; 392) das neuronale Netz (195; 995) mittels der Mehrzahl von Parametersätzen und mittels des Ergebniswerts jedes Parametersatzes der Mehrzahl von Parametersätzen trainiert; wobei der Datendetektorprozessor (192; 292; 392) durch Verwendung des neuronalen Netzes (195; 995) zu einem Parametersatz, der nicht von der Mehrzahl der Parametersätze umfasst ist, den Ergebniswert für diesen Parametersatz erzeugt und ausgibt;

wobei die Vorrichtung (1220) das Ergebnisbild abhängig von dem Ergebniswert erzeugt.

15. Computerprogramm mit einem Programmcode welcher Anweisungen umfasst, um ein System zur Erzeugung eines Ergebnisbildes dazu zu veranlassen, die Schritte des Verfahrens gemäß Anspruch 14 auszuführen, wobei das System zur Erzeugung eines Ergebnisbildes eine Vorrichtung zur Erzeugung des Ergebnisbildes und ein System zur Ermittlung eines physikalischen Verhaltens eines Messobjekts (210) oder eines Beleuchtungssystems (230) oder einer Leuchte (310) umfasst, wobei das ein System zur Ermittlung eines physikalischen Verhaltens einen Detektor (170; 270; 370), eine Steuervorrichtung (191; 291; 391), einen Detektordatenprozessor (192; 292; 392) und ein neuronales Netz (195; 995) umfasst.

## Claims

1. A system for generating a result image, the system for generating the result image comprising:

a system for determining a physical behavior of a measurement object (210) or an illumination system (230) or a lamp (310), and
a device (1220) for generating the result image, wherein the device (1220) is configured to generate the result image such that a picture of a scene by a camera system is simulated, wherein the device (1220) is configured to simulate a presence of the illumination system comprising one or more light sources illuminating the scene, and wherein the device (1220) is configured to simulate that one or more objects are located in the scene, wherein the device (1220) comprises a camera system parameter adjusting unit (110), an illumination system parameter adjusting unit (120), an object parameter adjusting unit (130) and an image generation unit (140), wherein the camera system parameter adjusting unit (110) is configured to adjust one or more camera system parameters, each of the one or more camera system parameters defining a property of the camera system, wherein the illumination system parameter adjusting unit (120) is configured to adjust one or more illumination system parameters, each of the one or more illumination system parameters defining a property of the illumination system,
wherein the object parameter adjusting unit (130) is configured, for each object of the one or more objects, to adjust one or more object parameters of this object, each of the one or more object parameters of this object defining a property of this object, and
wherein

the image generation unit (140) is configured to generate the result image depending on the one or more camera system parameters and depending on the one or more illumination system parameters and depending on the one or more object parameters of the one or more objects; and wherein the device of the device (1220) is configured to adjust, in addition to the one or more camera system parameters and in addition to the one or more illumination system parameters and in addition to the one or more object parameters of the one or more objects, one or more additional parameters; and wherein the image generation unit (140) is configured to generate the result image additionally depending on the one or more additional parameters, wherein at least one of the one or more additional parameters depends on a disturbance effect or on an effect caused by a non-ideal property of the camera system or the illumination system; or the image generation unit (140) is configured to generate one or more first images depending on the one or more camera system parameters and depending on the one or more illumination system parameters and depending on the one or more object parameters of the one or more objects, wherein the image generation unit (140) is configured to generate the result image using the one or more first images;

wherein the system for determining the physical behavior comprises a detector (170; 270; 370), a control device (191; 291; 391), a detector data processor (192; 292; 392) and a neural network (195; 995),
wherein the control device (191; 291; 391) is configured to successively adjust a plurality of parameter sets, wherein each parameter set of the plurality of parameter sets assigns a parameter value to each parameter of a group of two or more parameters, wherein each pair of two parameter sets of the plurality of parameter sets differs in at least one parameter value of a parameter of the group of parameters; and wherein the control device (191; 291; 391) is configured to adjust, for each parameter set of the plurality of parameter sets, by adjusting the parameter set, at least the detector (170; 270; 370) or the illumination system (230) or the lamp (310);
wherein the detector (170; 270; 370) is configured to detect, for each parameter set of the plurality of parameter sets adjusted by the control device (191; 291; 391), a light beam and to output a light beam detection value depending on the light beam to the detector data processor (192; 292; 392), wherein the light beam depends on the illumination system (230) or on the lamp (310); and
wherein the detector data processor (192; 292; 392) is configured to receive each parameter set of the plurality of parameter sets which is adjusted by the control device (191; 291; 391); and wherein the detector data processor (192; 292; 392) is configured to obtain, for each parameter set of the plurality of parameter sets, from the detector (170; 270; 370) the light beam detection value for this parameter set;
wherein the detector data processor (192; 292; 392) is configured to assign, to each parameter set of the plurality of parameter sets, a result value which is the light beam detection value of this parameter set or which depends on the light beam detection value of this parameter set; wherein the detector data processor (192; 292; 392) is configured to calculate, for each parameter set of the plurality of parameter sets, the result value as a result of a bidirectional reflectance distribution function depending on the light beam detection value of the parameter set;
wherein the detector data processor (192; 292; 392) is configured to train the neural network (195; 995) by means of the plurality of parameter sets and by means of the result value of each parameter set of the plurality of parameter sets; wherein the data detector processor (192; 292; 392) is configured to generate and output, by using the neural network (195; 995), for a parameter set which is not comprised by the plurality of parameter sets, the result value for this parameter set;
wherein the device (1220) is configured to generate the result image depending on the result value.

2. The system according to claim 1,
wherein the control device (191; 291; 391) is configured to adjust, for each parameter set of the plurality of parameter sets, by adjusting the parameter set, at least the detector (170; 270; 370) or the illumination system (230) or the lamp (310) by the control device (191; 291; 391) adjusting at least a first azimuth angle or at least a first zenith angle of the detector (170; 270; 370) or by the control device (191; 291; 391) adjusting at least a second azimuth angle or at least a second zenith angle of the illumination system (230) or the lamp (310).

3. The system according to claim 2,
wherein the control device (191; 291; 391) is configured to adjust, for each parameter set of the plurality of parameter sets, the first azimuth angle and the first zenith angle of the detector (170; 270; 370).

4. The system according to claim 3,
wherein the control device (191; 291; 391) is configured to adjust, for each parameter set of the plurality of parameter sets, the second azimuth angle and the second zenith angle of the illumination system (230).

5. The system according to any of the preceding claims,

wherein the system further comprises a holding device (220; 221) on which the measurement object (210) is attachable, and wherein the system further comprises the illumination system (230),
wherein the light beam detected by the detector (170; 270; 370) for each parameter set of the plurality of parameter sets adjusted by the control device (191; 291; 391) is a light beam which forms by reflection of a light beam emitted by the illumination system (230) on the measurement object (210) which is attached to the holding device (220; 221).

6. The system according to any of claims 1 to 4,

wherein the system further comprises a holding device (220; 221) on which the measurement object (210) is attachable, and wherein the system further comprises the illumination system (230),
wherein the light beam detected by the detector (170; 270; 370) for each parameter set of the plurality of parameter sets adjusted by the control device (191; 291; 391) is a light beam which forms by a light beam emitted by the illumination system (230) transmitting the measurement object (210) which is attached to the holding device (220; 221).

7. The system according to any of the preceding claims,
wherein the detector (170; 270; 370) is configured to detect, for each parameter set of the plurality of parameter sets adjusted by the control device (191; 291; 391), a light beam emitted by the lamp (310).

8. The system according to any of the preceding claims,
wherein the control device (191; 291; 391) is configured to adjust, for each parameter set of the plurality of parameter sets, the position on the lamp (310) such that the light beam detected by the detector (170; 270; 370) emanates from the position on the lamp (310).

9. The system according to claim 8,
wherein the control device (191; 291; 391) is configured to adjust, for each parameter set of the plurality of parameter sets, the position on the lamp (310) by adjusting at least an x-coordinate position and a y-coordinate position of this position.

10. The system according to any of the preceding claims,
wherein the detector data processor (192; 292; 392) is configured to calculate, for each parameter set of the plurality of parameter sets, the result value as a result of the bidirectional transmittance distribution function depending on the light beam detection value of the parameter set.

11. The system according to any of the preceding claims,

wherein the control device (191; 291; 391) is configured to adjust, for each parameter set of the plurality of parameter sets, a position in a linear axis system, and
wherein the detector (170; 270; 370) is a camera system with a matrix sensor.

12. The system according to claim 11,
wherein the control device (191; 291; 391) is configured to adjust, for each parameter set of the plurality of parameter sets, an f-number.

13. The system according to any of the preceding claims,
wherein the control device (191; 291; 391) is configured to adjust, for each parameter set of the plurality of parameter sets, a wavelength value, wherein a wavelength of the light beam detected by the detector (170; 270; 370) depends on the wavelength value.

14. A method for generating a result image,

wherein the method comprises a device (1220) for generating the result image to generate the result image such that a picture of a scene by a camera system is simulated, wherein the device (1220) simulates a presence of the illumination system comprising one or more light sources illuminating the scene, and wherein the device (1220) simulates that one or more objects are located in the scene,
wherein a camera system parameter adjusting unit (110) of the device (1220) adjusts one or more camera system parameters, each of the one or more camera system parameters defining a property of the camera system,
wherein an illumination system parameter adjusting unit (120) of the device (1220) adjusts one or more illumination system parameters, each of the one or more illumination system parameters defining a property of the illumination system,
wherein the object parameter adjusting unit (130) of the device (1220) adjusts, for each object of the one or more objects, one or more object parameters of this object, each of the one or more object parameters of this object defining a property of this object, and
wherein

an image generation unit (140) of the device (1220) generates the result image depending on the one or more camera system parameters and depending on the one or more illumination system parameters and depending on the one or more object parameters of the one or more objects; and wherein the device (1220) adjusts, in addition to the one or more camera system parameters and in addition to the one or more illumination system parameters and in addition to the one or more object parameters of the one or more objects, one or more additional parameters; and wherein the image generation unit (140) generates the result image additionally depending on the one or more additional parameters, wherein at least one of the one or more additional parameters depends on a disturbance effect or on an effect caused by a non-ideal property of the camera system or the illumination system; or

the image generation unit (140) generates one or more first images depending on the one or more camera system parameters and depending on the one or more illumination system parameters and depending on the one or more object parameters of the one or more objects, wherein the image generation unit (140) generates the result image using the one or more first images;

wherein the method further comprises a control device (191; 291; 391) of a system for determining the physical behavior to successively adjust a plurality of parameter sets, wherein each parameter set of the plurality of parameter sets assigns a parameter value to each parameter of a group of two or more parameters, wherein each pair of two parameter sets of the plurality of parameter sets differs in at least one parameter value of a parameter of the group of parameters; and wherein the control device (191; 291; 391) adjusts, for each parameter set of the plurality of parameter sets, by adjusting the parameter set, at least the detector (170; 270; 370) or the illumination system (230) or the lamp (310);

wherein a detector (170; 270; 370) of the system for determining the physical behavior detects, for each parameter set of the plurality of parameter sets adjusted by the control device (191; 291; 391), a light beam and outputs a light beam detection value depending on the light beam to a detector data processor (192; 292; 392) of the system for determining the physical behavior, wherein the light beam depends on the illumination system (230) or on the lamp (310); and

wherein the detector data processor (192; 292; 392) receives each parameter set of the plurality of parameter sets which is adjusted by the control device (191; 291; 391); and wherein the detector data processor (192; 292; 392) obtains, for each parameter set of the plurality of parameter sets, from the detector (170; 270; 370) the light beam detection value for this parameter set;

wherein the detector data processor (192; 292; 392) assigns, to each parameter set of the plurality of parameter sets, a result value which is the light beam detection value of this parameter set or which depends on the light beam detection value of this parameter set; wherein the detector data processor (192; 292; 392) calculates, for each parameter set of the plurality of parameter sets, the result value as a result of a bidirectional reflectance distribution function depending on the light beam detection value of the parameter set;

wherein the detector data processor (192; 292; 392) trains the neural network (195; 995) by means of the plurality of parameter sets and by means of the result value of each parameter set of the plurality of parameter sets; wherein the data detector processor (192; 292; 392) generates and outputs, by using the neural network (195; 995), for a parameter set which is not comprised by the plurality of parameter sets, the result value for this parameter set;

wherein the device (1220) generates the result image depending on the result value.

15. Computer program comprising a program code which includes instructions in order to cause a system for generating a result image to perform the steps of the method in accordance with claim 14, wherein the system for generating a result image comprises a device for generating the result image and a system for determining a physical behavior of a measurement object (210) or an illumination system (230) or a lamp (310), wherein the system for determining a physical behavior comprises a detector (170; 270; 370), a control device (191; 291; 391), a detector data processor (192; 292; 392) and a neural network (195; 995).

**Revendications**

1. Système de génération d'une image résultante, ledit système de génération d'une image résultante comprenant :

un système de détermination d'un comportement physique d'un objet de mesure (210) ou d'un système d'éclairage (230) ou d'un luminaire (310), et

un dispositif (1220) pour générer l'image résultante, ledit dispositif (1220) étant configuré pour générer l'image résultante de manière à simuler une prise de vue d'une scène par un système de caméra, ledit dispositif (1220) étant configuré pour simuler la présence du système d'éclairage comprenant une ou plusieurs sources lumineuses qui éclairent la scène, et ledit dispositif (1220) étant configuré pour simuler la présence, dans la scène, d'un ou plusieurs objets,

le dispositif (1220) comprenant une unité de réglage des paramètres du système de caméra (110), une unité de réglage des paramètres du système d'éclairage (120), une unité de réglage des paramètres d'objet (130) et une unité de génération d'images (140),

l'unité de réglage des paramètres du système de caméra (110) étant configurée pour régler un ou plusieurs paramètres du système de caméra, chacun desdits un ou plusieurs paramètres du système de caméra définissant une propriété du système de caméra,

l'unité de réglage des paramètres du système d'éclairage (120) étant configurée pour régler un ou plusieurs paramètres du système d'éclairage, chacun desdits un ou plusieurs paramètres du système d'éclairage définissant une propriété du système d'éclairage,

l'unité de réglage des paramètres d'objet (130) étant configurée, pour chaque objet desdits un ou plusieurs objets, pour régler un ou plusieurs paramètres d'objet dudit objet, chacun desdits un ou plusieurs paramètres d'objet dudit objet définissant une propriété dudit objet, et

l'unité de génération d'images (140) étant configurée pour générer l'image résultante en fonction desdits un ou plusieurs paramètres du système de caméra et en fonction desdits un ou plusieurs paramètres du système d'éclairage et en fonction desdits un ou plusieurs paramètres d'objet desdits un ou plusieurs objets ; et le dispositif (1220) étant configuré, en plus desdits un ou plusieurs paramètres du système de caméra et en plus desdits un ou plusieurs paramètres du système d'éclairage et en plus desdits un ou plusieurs paramètres d'objet desdits un ou plusieurs objets, pour régler un ou plusieurs paramètres supplémentaires ; et l'unité de génération d'images (140) étant configurée pour générer l'image résultante en outre en fonction desdits un ou plusieurs paramètres supplémentaires, au moins un desdits un ou plusieurs paramètres supplémentaires dépendant d'un effet perturbateur ou d'un effet dû à une propriété non idéale du système de caméra ou du système d'éclairage ; ou l'unité de génération d'images (140) étant configurée pour générer une ou plusieurs premières images en fonction desdits un ou plusieurs paramètres du système de caméra et en fonction desdits un ou plusieurs paramètres du système d'éclairage et en fonction desdits un ou plusieurs paramètres d'objet desdits un ou plusieurs objets, l'unité de génération d'images (140) étant configurée pour générer l'image résultante à l'aide de la ou des premières images ;

le système de détermination du comportement physique comprenant un détecteur (170 ; 270 ; 370), un dispositif de commande (191 ; 291 ; 391), un processeur de données de détecteur (192 ; 292 ; 392) et un réseau neuronal (195 ; 995),

le dispositif de commande (191 ; 291 ; 391) étant configuré pour régler successivement une pluralité d'ensembles de paramètres, chaque ensemble de paramètres de la pluralité d'ensembles de paramètres attribuant une valeur de paramètre à chaque paramètre d'un groupe de deux paramètres ou plus, chaque paire de deux ensembles de paramètres de la pluralité d'ensembles de paramètres différant par au moins une valeur de paramètre d'un paramètre du groupe de paramètres ; et le dispositif de commande (191 ; 291 ; 391) étant configuré pour régler, pour chaque ensemble de paramètres de la pluralité d'ensembles de paramètres, au moins le détecteur (170 ; 270 ; 370) ou le système d'éclairage (230) ou le luminaire (310) en réglant l'ensemble de paramètres ;

le détecteur (170 ; 270 ; 370) étant configuré pour détecter, pour chacun des ensembles de paramètres réglés par le dispositif de commande (191 ; 291 ; 391) parmi la pluralité d'ensembles de paramètres, un faisceau lumineux et pour fournir une valeur de détection de faisceau lumineux, qui dépend du faisceau lumineux, au processeur de données de détecteur (192 ; 292 ; 392), le faisceau lumineux dépendant du système d'éclairage (230) ou du luminaire (310) ; et

le processeur de données de détecteur (192 ; 292 ; 392) étant configuré pour recevoir chaque ensemble de paramètres parmi la pluralité d'ensembles de paramètres qui est réglé par le dispositif de commande (191 ; 291 ; 391) ; et le processeur de données de détecteur (192 ; 292 ; 392) étant configuré pour obtenir, pour chaque ensemble de paramètres parmi la pluralité d'ensembles de paramètres, la valeur de détection de faisceau lumineux correspondant à cet ensemble de paramètres à partir du détecteur (170 ; 270 ; 370) ;

le processeur de données de détecteur (192 ; 292 ; 392) étant configuré pour attribuer, à chaque ensemble de paramètres de la pluralité d'ensembles de paramètres, une valeur de résultat qui est la valeur de détection de faisceau lumineux de cet ensemble de paramètres ou qui dépend de la valeur de détection de faisceau lumineux de cet ensemble de paramètres ; le processeur de données de détecteur (192 ; 292 ; 392) étant configuré pour calculer, pour chaque ensemble de paramètres de la pluralité d'ensembles de paramètres, la valeur de résultat en tant que résultat d'une fonction de distribution de réflectance bidirectionnelle en fonction de la valeur de détection de faisceau lumineux de l'ensemble de paramètres ;

le processeur de données de détecteur (192 ; 292 ; 392) étant configuré pour entraîner le réseau neuronal (195 ; 995) au moyen de la pluralité d'ensembles de paramètres et au moyen de la valeur de résultat de chaque ensemble de paramètres de la pluralité d'ensembles de paramètres ; le processeur de données de détecteur (192 ; 292 ; 392) étant configuré pour générer et fournir, par utilisation du réseau neuronal (195 ; 995), pour un ensemble de paramètres qui n'est pas compris dans la pluralité d'ensembles de paramètres, la valeur de résultat pour cet ensemble de paramètres ;
le dispositif (1220) étant configuré pour générer l'image résultante en fonction de la valeur de résultat.

2. Système selon la revendication 1,
le dispositif de commande (191 ; 291 ; 391) étant configuré pour régler, pour chaque ensemble de paramètres de la pluralité d'ensembles de paramètres, au moins le détecteur (170 ; 270 ; 370) ou le système d'éclairage (230) ou le luminaire (310) en réglant, par le dispositif de commande (191 ; 291 ; 391), au moins un premier angle d'azimut ou au moins un premier angle de zénith du détecteur (170 ; 270 ; 370), ou en réglant, par le dispositif de commande (191 ; 291 ; 391), au moins un deuxième angle d'azimut ou au moins un deuxième angle de zénith du système d'éclairage (230) ou du luminaire (310).

3. Système selon la revendication 2,
le dispositif de commande (191 ; 291 ; 391) étant configuré pour régler, pour chaque ensemble de paramètres de la pluralité d'ensembles de paramètres, le premier angle d'azimut et le premier angle de zénith du détecteur (170 ; 270 ; 370).

4. Système selon la revendication 3,
le dispositif de commande (191 ; 291 ; 391) étant configuré pour régler, pour chaque ensemble de paramètres de la pluralité d'ensembles de paramètres, le deuxième angle d'azimut et le deuxième angle de zénith du système d'éclairage (230).

5. Système selon l'une des revendications précédentes,

le système comportant en outre un dispositif de fixation (220 ; 221) sur lequel l'objet de mesure (210) est apte à être fixé, et comprenant en outre le système d'éclairage (230),
le faisceau lumineux détecté par le détecteur (170 ; 270 ; 370) pour chacun des ensembles de paramètres de la pluralité d'ensembles de paramètres réglés par le dispositif de commande (191 ; 291 ; 391) étant un faisceau lumineux qui est produit par réflexion, sur l'objet de mesure (210) fixé sur le dispositif de fixation (220 ; 221), d'un faisceau lumineux émis par le système d'éclairage (230).

6. Système selon l'une des revendications 1 à 4,

le système comportant en outre un dispositif de fixation (220 ; 221) sur lequel l'objet de mesure (210) est apte à être fixé, et comprenant en outre le système d'éclairage (230),
le faisceau lumineux détecté par le détecteur (170 ; 270 ; 370) pour chacun des ensembles de paramètres de la pluralité d'ensembles de paramètres réglés par le dispositif de commande (191 ; 291 ; 391) étant un faisceau lumineux qui est produit du fait qu'un faisceau lumineux émis par le système d'éclairage (230) est transmis à travers l'objet de mesure (210) fixé sur le dispositif de fixation (220 ; 221).

7. Système selon l'une des revendications précédentes,
le détecteur (170 ; 270 ; 370) étant configuré pour détecter, pour chacun des ensembles de paramètres réglés par le dispositif de commande (191 ; 291 ; 391) parmi la pluralité d'ensembles de paramètres, un faisceau lumineux qui est émis par le luminaire (310).

8. Système selon l'une des revendications précédentes,
le dispositif de commande (191 ; 291 ; 391) étant configuré pour régler, pour chaque ensemble de paramètres parmi la pluralité d'ensembles de paramètres, la position sur le luminaire (310) de telle sorte que le faisceau lumineux détecté par le détecteur (170 ; 270 ; 370) provienne de ladite position sur le luminaire (310).

9. Système selon la revendication 8,
le dispositif de commande (191 ; 291 ; 391) étant configuré pour régler, pour chaque ensemble de paramètres parmi la pluralité d'ensembles de paramètres, la position sur le luminaire (310) en réglant au moins une coordonnée x et une coordonnée y de ladite position.

10. Système selon l'une des revendications précédentes,
le processeur de données de détecteur (192 ; 292 ; 392) étant configuré pour calculer, pour chaque ensemble de paramètres parmi la pluralité d'ensembles de paramètres, la valeur de résultat en tant que résultat de la fonction de distribution de transmission bidirectionnelle en fonction de la valeur de détection de faisceau lumineux de l'ensemble de paramètres.

**11.** Système selon l'une des revendications précédentes,

le dispositif de commande (191 ; 291 ; 391) étant configuré pour régler, pour chaque ensemble de paramètres parmi la pluralité d'ensembles de paramètres, une position dans un système d'axes linéaires, et le détecteur (170 ; 270 ; 370) étant un système de caméra comportant un capteur matriciel.

**12.** Système selon la revendication 11, le dispositif de commande (191 ; 291 ; 391) étant configuré pour régler, pour chaque ensemble de paramètres parmi la pluralité d'ensembles de paramètres, un nombre d'ouverture.

**13.** Système selon l'une des revendications précédentes, le dispositif de commande (191 ; 291 ; 391) étant configuré pour régler une valeur de longueur d'onde pour chaque ensemble de paramètres parmi la pluralité d'ensembles de paramètres, une longueur d'onde du faisceau lumineux détecté par le détecteur (170 ; 270 ; 370) dépendant de la valeur de longueur d'onde.

**14.** Procédé pour générer une image résultante,

le procédé comprenant le fait qu'un dispositif (1220) pour générer l'image résultante génère l'image résultante de manière à simuler une prise de vue d'une scène par un système de caméra, le dispositif (1220) simulant la présence du système d'éclairage comprenant une ou plusieurs sources lumineuses qui éclairent la scène, et le dispositif (1220) simulant la présence, dans la scène, d'un ou plusieurs objets,
dans lequel une unité de réglage des paramètres du système de caméra (110) du dispositif (1220) règle un ou plusieurs paramètres du système de caméra, chacun desdits un ou plusieurs paramètres du système de caméra définissant une propriété du système de caméra,
dans lequel une unité de réglage des paramètres du système d'éclairage (120) du dispositif (1220) règle un ou plusieurs paramètres du système d'éclairage, chacun desdits un ou plusieurs paramètres du système d'éclairage définissant une propriété du système d'éclairage,
dans lequel l'unité de réglage des paramètres d'objet (130) du dispositif (1220) règle, pour chaque objet desdits un ou plusieurs objets, un ou plusieurs paramètres d'objet dudit objet, chacun desdits un ou plusieurs paramètres d'objet dudit objet définissant une propriété dudit objet, et

une unité de génération d'images (140) du dispositif (1220) génère l'image résultante en fonction desdits un ou plusieurs paramètres du système de caméra et en fonction desdits un ou plusieurs paramètres du système d'éclairage et en fonction desdits un ou plusieurs paramètres d'objet desdits un ou plusieurs objets ; et le dispositif (1220) règle, en plus desdits un ou plusieurs paramètres du système de caméra et en plus desdits un ou plusieurs paramètres du système d'éclairage et en plus desdits un ou plusieurs paramètres d'objet desdits un ou plusieurs objets, un ou plusieurs paramètres supplémentaires ; et l'unité de génération d'images (140) génère l'image résultante en outre en fonction desdits un ou plusieurs paramètres supplémentaires, au moins un desdits un ou plusieurs paramètres supplémentaires dépendant d'un effet perturbateur ou d'un effet dû à une propriété non idéale du système de caméra ou du système d'éclairage ; ou
l'unité de génération d'images (140) génère une ou plusieurs premières images en fonction desdits un ou plusieurs paramètres du système de caméra et en fonction desdits un ou plusieurs paramètres du système d'éclairage et en fonction desdits un ou plusieurs paramètres d'objet desdits un ou plusieurs objets, l'unité de génération d'images (140) génère l'image résultante à l'aide de la ou des premières images ;

le procédé comprenant en outre le fait qu'un dispositif de commande (191 ; 291 ; 391) d'un système de détermination du comportement physique règle successivement une pluralité d'ensembles de paramètres, chaque ensemble de paramètres de la pluralité d'ensembles de paramètres attribuant une valeur de paramètre à chaque paramètre d'un groupe de deux paramètres ou plus, chaque paire de deux ensembles de paramètres de la pluralité d'ensembles de paramètres différant par au moins une valeur de paramètre d'un paramètre du groupe de paramètres ; et le dispositif de commande (191 ; 291 ; 391) règle, pour chaque ensemble de paramètres de la pluralité d'ensembles de paramètres, au moins le détecteur (170 ; 270 ; 370) ou le système d'éclairage (230) ou le luminaire (310) en réglant l'ensemble de paramètres ;
un détecteur (170 ; 270 ; 370) du système de détermination du comportement physique détecte, pour chacun des ensembles de paramètres de la pluralité d'ensembles de paramètres réglés par le dispositif de commande (191 ;

291 ; 391), un faisceau lumineux et fournit une valeur de détection de faisceau lumineux, qui dépend du faisceau lumineux, à un processeur de données de détecteur (192 ; 292 ; 392) du système de détermination du comportement physique, le faisceau lumineux dépendant du système d'éclairage (230) ou du luminaire (310) ; et

le processeur de données de détecteur (192 ; 292 ; 392) reçoit chaque ensemble de paramètres parmi la pluralité d'ensembles de paramètres qui est réglé par le dispositif de commande (191 ; 291 ; 391) ; et le processeur de données de détecteur (192 ; 292 ; 392) obtient, pour chaque ensemble de paramètres parmi la pluralité d'ensembles de paramètres, du détecteur (170 ; 270 ; 370) la valeur de détection de faisceau lumineux correspondant à cet ensemble de paramètres ;

le processeur de données de détecteur (192 ; 292 ; 392) attribue, à chaque ensemble de paramètres de la pluralité d'ensembles de paramètres, une valeur de résultat qui est la valeur de détection de faisceau lumineux de cet ensemble de paramètres ou qui dépend de la valeur de détection de faisceau lumineux de cet ensemble de paramètres ; le processeur de données de détecteur (192 ; 292 ; 392) calcule, pour chaque ensemble de paramètres de la pluralité d'ensembles de paramètres, la valeur de résultat en tant que résultat d'une fonction de distribution de réflectance bidirectionnelle en fonction de la valeur de détection de faisceau lumineux de l'ensemble de paramètres ;

le processeur de données de détecteur (192 ; 292 ; 392) entraîne le réseau neuronal (195 ; 995) au moyen de la pluralité d'ensembles de paramètres et au moyen de la valeur de résultat de chaque ensemble de paramètres de la pluralité d'ensembles de paramètres ; le processeur de données de détecteur (192 ; 292 ; 392) génère et fournit, par utilisation du réseau neuronal (195 ; 995), pour un ensemble de paramètres qui n'est pas compris dans la pluralité d'ensembles de paramètres, la valeur de résultat pour cet ensemble de paramètres ;

le dispositif (1220) génère l'image résultante en fonction de la valeur de résultat.

15. Programme informatique comprenant un code de programme comportant des instructions pour amener un système de génération d'une image résultante à exécuter les étapes du procédé selon la revendication 14, le système de génération d'une image résultante comprenant un dispositif de génération de l'image résultante et un système de détermination d'un comportement physique d'un objet de mesure (210) ou d'un système d'éclairage (230) ou d'un luminaire (310), le système de détermination d'un comportement physique comprenant un détecteur (170 ; 270 ; 370), un dispositif de commande (191 ; 291 ; 391), un processeur de données de détecteur (192 ; 292 ; 392) et un réseau neuronal (195 ; 995).

140 — Bilderzeugungs-einheit

Ergebnisbild

110 — Kamerasystemparameter-Einstelleinheit

Kamerasystem-parameter

120 — Beleuchtungssystem-parameter-Einstelleinheit

Beleuchtungssystem-parameter

130 — Objektparameter-Einstelleinheit

Objektparameter

Zusatzparameter

Fig. 1

Fig. 2

Fig. 3

```
┌─────────────────────┐        abbildungssystemabhängige
│   Beschreibung des  │              Parameter
│  Abbildungssystems  │─────────────────────────────────────┐
└─────────────────────┘                                     │
          │                                                 ▼
          │                                        ┌──────────────────┐
          │              ──────────────────────────▶│  Operatoren für die │
          │                 szenenabhängige          │   Einflussquellen   │
          │                    Parameter            └──────────────────┘
          │                                                  │
          ▼                                                  ▼
┌─────────────────┐      ┌──────────┐      ┌──────────────────┐
│    Szenen-      │─────▶│ Renderer │─────▶│  Berücksichtigung │──────▶
│  beschreibung   │      └──────────┘      │ der Einflussquellen│   sensorrealistisches
└─────────────────┘       fotorealistisches └──────────────────┘          Bild
                               Bild
```

Fig. 4

Fig. 5

Fig. 6

EP 3 746 988 B1

Fig. 7

Fig. 8

EP 3 746 988 B1

Fig. 9

EP 3 746 988 B1

175

180

Bereitstellungseinheit

Lichtstrahldichte
für Paar

Berechnungseinheit

Lichtstrahldichte
für Bildpunkt

Fig. 10

Fig. 11

Fig. 12

```
┌─────────────────────┐                      ┌─────────────────────┐
│   1310              │                      │   1320              │
│                     │   Lichtstrahldichten │                     │   Ergebnisbild
│   Vorrichtung       │ ───────────────────▶ │   Vorrichtung       │ ───────────────▶
│   gemäß Fig. 10     │                      │   gemäß Fig. 1 oder 3│
│                     │                      │                     │
└─────────────────────┘                      └─────────────────────┘
```

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   US 7929142 B2

**In der Beschreibung aufgeführte Nicht-Patentliteratur**

*   **LECH SWIRSKI et al.** Rendering synthetic ground truth images for eye tracker evaluation. *EYE TRACKING RESEARCH AND APPLICATIONS*, 26 March 2014, 219-222

*   **GARGAN DAVID**. Approximating Reflectance Functions using Neural Networks. *RENDERING TECHNIQUES '98 : PROCEEDINGS OF THE EUROGRAPHICS WORKSHOP IN VIENNA, AUSTRIA*